(19) Europäisches Patentamt / European Patent Office / Office européen des brevets

(11) **EP 2 037 171 A1**

(12) **EUROPEAN PATENT APPLICATION**
published in accordance with Art. 153(4) EPC

(43) Date of publication:
**18.03.2009 Bulletin 2009/12**

(51) Int Cl.:
*F23C 99/00* (2006.01)   *B01D 53/94* (2006.01)
*F23N 1/02* (2006.01)   *F23N 5/00* (2006.01)

(21) Application number: **07744476.8**

(22) Date of filing: **31.05.2007**

(86) International application number:
**PCT/JP2007/061068**

(87) International publication number:
**WO 2008/004388 (10.01.2008 Gazette 2008/02)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **04.07.2006 JP 2006184879**
**07.07.2006 JP 2006188544**
**07.07.2006 JP 2006188545**
**31.07.2006 JP 2006208520**
**16.05.2007 JP 2007130785**

(71) Applicant: **Miura Protec Co., Ltd.**
**Matsuyama-shi**
**Ehime 799-2696 (JP)**

(72) Inventors:
• **TANAKA, Osamu**
  **Matsuyama-shi**
  **Ehime 799-2696 (JP)**
• **TOKUNAGA, Yukihiro**
  **Matsuyama-shi**
  **Ehime 799-2696 (JP)**
• **OKAMOTO, Yusuke**
  **Matsuyama-shi**
  **Ehime 799-2696 (JP)**
• **YASUI, Kenji**
  **Matsuyama-shi**
  **Ehime 799-2696 (JP)**

(74) Representative: **Schlotter, Alexander Carolus Paul**
**Wallinger Ricker Schlotter Foerstl**
**Patent- und Rechtsanwälte**
**Zweibrückenstrasse 5-7**
**80331 München (DE)**

(54) **COMBUSTION APPARATUS**

(57) A great amount of carbon monoxide equal to or more than a reference emission amount is prevented from being emitted to the atmosphere by simple means at combustion initiation.

A combustion apparatus includes a burner 1 for generating gas by combustion, an endothermic device 2 for absorbing heat from the gas in the gas after the passage through the endothermic device, a catalyst 4 for oxidizing at least carbon monoxide, and a control device 8 for controlling the combustion of the burner 1 to a first set condition so that a concentration of the carbon monoxide in the gas on a primary side of the catalyst becomes a first set value, in which the control device 8 performs a control at combustion initiation of suppressing generation and/or emission of the carbon monoxide at combustion initiation of the burner 1.

*FIG. 1*

**Description**

[Technical Field]

The present invention relates to a combustion apparatus employed in a water-tube boiler, a regenerator of an absorption refrigerator and the like.

[Background art of the Invention]

Examples of generally known principles of suppressing NOx emissions include the suppression of flame (combustion gas) temperatures and a decrease in retention time of combustion gas at high temperatures. As such, various technologies are available for decreasing the emission of nitrogen oxides by applying these principles. Various methods have been proposed and put into practical use, for example, two-stage combustion, lean-rich combustion, exhaust gas recirculate combustion, water mixing combustion, steam injection combustion, and flame cooling combustion by a water tube group.

Moreover, NOx sources relatively small in capacity such as water-tube boilers are also beginning to be required for a further decrease in emission of NOx due to an increasing awareness of environmental problems. In this case, the decrease in NOx generation inevitably entails an increased amount of emitted CO, thus making it difficult to attain a simultaneous decrease in NOx and CO.

A cause of the above-mentioned problem is that a simultaneous decrease in emission of NOx and CO is technically incompatible. More specifically, when temperatures of combustion gas are abruptly lowered and kept at temperatures of 900°C or lower in an attempt to decrease the emission of NOx to result in an ample generation of CO, the thus generated CO is emitted before oxidization to increase the amount of emitted CO. In contrast, temperatures of combustion gas are kept higher in an attempt to decrease the amount of emitted CO, thus resulting in an insufficient suppression of NOx generation.

In order to solve the above-mentioned problem, the applicant has proposed low NOx and low CO emission technologies for decreasing as much as possible the amount of CO, which is generated in accordance with a decrease in the amount of NOx generation, and also suppressing temperatures of combustion gas so as to attain oxidation of the thus generated CO. The technologies are now commercially feasible (refer to Patent Document 1). However, an actual value of emitted NOx remains to be about 25 ppm in the low NOx emission technologies described in Patent Document 1.

In order to solve the above-mentioned problem, the applicant has proposed a low NOx combustion method in which a NOx decreasing step is conducted to suppress temperatures of combustion gas so as to give priority to suppression of NOx generation rather than a decrease in the amount of emitted CO, thereby keeping the value of the thus generated NOx to a predetermined value or lower, and a CO decreasing step is, thereafter, conducted so as to keep the value of CO emitted from the NOx decreasing step to a predetermined value or lower (refer to Patent Document 2). The technologies disclosed in Patent Document 2 are able to decrease the amount of emitted NOx to a value lower than 10 ppm, but find it difficult to decrease the amount of emitted NOx to a value below 5 ppm. This is due to the fact that combustion characteristics inevitably entail NOx generation at 5 ppm or greater.

Then, in the low NOx emission technologies described in Patent Document 2, combustion is conducted in a so-called high air-ratio combustion region where the air ratio is 1.38 or greater. In contrast, in a combustion region where the air ratio is infinitely close to 1, that is, low, nitrogen oxides are generated in an increased amount, thus making it difficult to attain a simultaneous decrease in the amount of emitted NOx and CO. There is also posed a difficulty in controlling a stable combustion due to a possible occurrence of backfire where the air ratio is 1 or lower. Therefore, the low air-ratio combustion region has hardly been subjected to research and development.

The inventors of the present application have studied earnestly, and as a result, found the invention of a combustion method that is novel in the industry, capable of decreasing the emission amount of nitrogen oxides to infinitely close to zero and decreasing the emission amount of carbon monoxide in a permissible range in a combustion region of a low air ratio infinitely close to 1 which has hardly been studied, thereby realizing energy saving with a low air ratio, and filed the application previously (JP 2005-300343).

According to the present invention, the concentration ratio of oxygen, nitrogen oxides and carbon monoxide in gas on a primary side of a catalyst is adjusted using a catalyst reducing nitrogen oxides by carbon monoxide, whereby the concentration of nitrogen oxides on a secondary side of the catalyst can be decreased to substantially zero.

[Patent Document 1] Japanese Patent No.3221582 (corresponding U.S. Patent: U.S. Patent No. 5353748)

[Patent Document 2] Japanese unexamined Patent Application, First Publication No. 2004-125378 (corresponding U.S. Patent: U.S. Patent No. 6792895)

[Disclosure of the Invention]

[Problem to be solved by the Invention]

The problem to be solved by the present invention is to prevent carbon monoxide in an amount equal to or more than a reference emission amount from being emitted to the atmosphere during nonstationary combustion, i.e., during the combustion initiation or the change in a combustion amount by simple means.

[Means for solving the Problem]

The present invention has been made to solve the above-mentioned problem. The invention according to Claim 1 is a combustion apparatus, including: a burner generating gas by combustion; an endothermic device absorbing heat from the gas; a catalyst oxidizing at least carbon monoxide in the gas after a passage through the endothermic device; and a control device controlling the combustion of the burner to a first set condition at initiation so that a concentration of the carbon monoxide in the gas on a primary side of the catalyst becomes a first set value at initiation, in which the control device performs a control at combustion initiation of suppressing generation and/or emission of the carbon monoxide at combustion initiation of the burner.

According to the invention according to Claim 1, since the generation of carbon monoxide is suppressed or the emission of carbon monoxide is suppressed at the combustion initiation of the burner, the effect capable of decreasing the concentration of emitted carbon monoxide is exerted.

The invention according to Claim 2 is characterized in that, in Claim 1, the control at combustion initiation controls the combustion of the burner to a second set condition at initiation so that the concentration of the carbon monoxide on the primary side of the catalyst becomes a second set value at initiation lower than the first set value at initiation.

The invention according to Claim 2 exerts the effect capable of decreasing the concentration of emitted carbon monoxide by suppressing the generation amount of carbon monoxide, in addition to the effect by the invention according to Claim 1.

The invention according to Claim 3 is characterized in that, in Claim 2, the catalyst is preheated to an activation temperature by the combustion under the second set condition at initiation, thereby suppressing the emission of the carbon monoxide.

The invention according to Claim 3 exerts the effect capable of preheating the catalyst by combustion under the second set condition at initiation and preventing carbon monoxide in an amount equal to or more than a reference emission amount from being emitted before an activation temperature of the catalyst is reached, in addition to the effect by the invention according to Claim 2.

The invention according to Claim 4 is characterized in that, in Claim 2 or 3, the first set condition at initiation and the second set condition at initiation are changed by changing an air ratio of the burner.

The invention according to Claim 4 exerts the effect capable of easily changing the first set condition at initiation and the second set condition at initiation, in addition to the effect by the invention according to Claim 2 or 3.

The invention according to Claim 5 is characterized, in Claim 1, including a heating device of the catalyst, in which the control at combustion initiation by the control device is a control of preheating the catalyst by controlling the heating device at combustion initiation of the burner.

The invention according to Claim 5 exerts the effect capable of preventing carbon monoxide in an amount equal to or more than a reference emission amount from being emitted before the activation temperature of the catalyst is reached, in addition to the effect by the invention according to Claim 1.

The invention according to Claim 6 is a combustion apparatus, including: a burner; an endothermic device absorbing heat from gas generated by the burner; a catalyst oxidizing at least carbon oxides in the gas after a passage through the endothermic device; and a control device controlling the combustion by the burner to a first set condition at a time of change so that a concentration of carbon monoxide in the gas on a primary side of the catalyst becomes a first set value at a time of change, in which the burner is capable of switching between a first combustion amount and a second combustion amount, and the control device performs a control at a time of change in a combustion amount of suppressing generation of carbon monoxide when the first combustion amount is changed to the second combustion amount or vice versa.

The invention according to Claim 6 exerts the effect capable of decreasing the concentration of emitted carbon monoxide during the change in a combustion amount of the burner.

The invention according to Claim 7 is characterized in that, in Claim 6, the control at a time of change in a combustion amount is a control of controlling the combustion by the burner to a second set condition at a time of change so that the concentration of the carbon monoxide on the primary side of the catalyst becomes a second set value at a time of change lower than a first set value at a time of change, and thereafter, shifting the condition to the first set condition at a time of change.

According to the invention according to Claim 7, since the combustion under the second set condition at a time of change is shifted to the combustion under the first set condition at a time of change, a great amount of carbon monoxide can be prevented from being emitted during the shift of a combustion amount, in addition to the effect by the invention according to Claim 6.

The invention according to Claim 8 is characterized in that, in Claim 6 or 7, the first set condition at a time of change and the second set condition at a time of change are changed by changing an air ratio of the burner.

The invention according to Claim 8 exerts the effect of capable of easily changing the first set condition at a time of change and the second set condition at a time of change, in addition to the effect by the invention according to Claim 6 or Claim 7.

The invention according to Claim 9 is characterized in that, in Claim 1 or 6, the catalyst oxidizes carbon monoxide and reduces nitrogen oxide, and the control device adjusts by the combustion under the first set condition a concentration ratio of oxygen, nitrogen oxides and carbon monoxide in gas on the primary side of the oxidation catalyst so that a concentration of nitrogen oxides on a secondary side of the oxidation catalyst is decreased to substantially zero or a predetermined value or less and a concentration of carbon monoxides on the secondary side of the oxidation catalyst is decreased to substantially zero or a predetermined value or less. In Claim 9 and the following claims in the present application, the "first set condition" refers to a first set condition at initiation or a first set condition at a time of change, and the "second set condition" refers to a second set condition at initiation or a second set condition at a time of change.

The invention according to Claim 10 is characterized in that, in Claim 1 or 6, the catalyst oxidizes carbon monoxide and reduces nitrogen oxides, the control device performs a concentration ratio adjustment of adjusting a concentration ratio K of oxygen, nitrogen oxides and carbon monoxide in gas on the primary side of the oxidation catalyst by the combustion under the first set condition, and the concentration ratio adjustment is either of Adjustment 0, Adjustment 1, and Adjustment 2 as described below.

Adjustment 0: the concentration ratio K is adjusted to a predetermined reference concentration ratio K0 in which a concentration of nitrogen oxides and a concentration of carbon monoxide on a secondary side of the oxidation catalyst are decreased to substantially zero.

Adjustment 1: the concentration ratio K is adjusted to a first predetermined concentration ratio K1 in which the concentration of nitrogen oxides on the secondary side of the oxidation catalyst is decreased to substantially zero and the concentration of carbon monoxide on the secondary side of the oxidation catalyst is decreased to a predetermined value or lower.

Adjustment 2: the concentration ratio K is adjusted to a second predetermined concentration ratio K2 in which the concentration of carbon monoxide on the secondary side of the oxidation catalyst is decreased to substantially zero and the concentration of nitrogen oxides on the secondary side of the oxidation catalyst is decreased to a predetermined value or lower.

The invention according to Claim 11 is characterized in that, in Claim 10, a formula for determining the predetermined reference concentration ratio K0 is given as the following formula (1), the predetermined reference concentration ratio K0 satisfies the following formula (2), the first predetermined concentration ratio K1 is made smaller than the predetermined reference concentration ratio K0, and the second predetermined concentration ratio K2 is made larger than the predetermined reference concentration ratio K0.

$$([NOx] + 2[O_2])/[CO] = K \cdots (1)$$

$$1.0 \leq K = K0 \leq 2.0 \qquad \cdots (2)$$

(In formula (1), [CO], [NOx] and [O_2] denote the respective concentrations of carbon monoxide, nitrogen oxides and oxygen, satisfying the condition of $[O_2] > 0$.)

According to the invention according to Claims 9 to 11, in addition to the effect by the invention according to Claim 1 or Claim 6, the concentration of nitrogen oxides on a secondary side of the oxidation catalyst can be decreased to substantially zero or a predetermined value or less, and the concentration of carbon monoxide on the secondary side of the oxidation catalyst can be decreased to substantially zero or a predetermined value or less.

In this instance, the concentration of nitrogen oxides decreased to substantially zero is preferably 5 ppm, more preferably 3 ppm and still more preferably zero. The concentration of carbon monoxide decreased to substantially zero is preferably 30 ppm and more preferably 10 ppm. Further, in the following description, the concentration of oxygen decreased to substantially zero is 100 ppm or lower and preferably below a measurement limit value. Still further, the concentration of nitrogen oxides and that of carbon monoxide equal to or lower than a predetermined value mean a value below the standard for concentrations of emissions stipulated in various territories and countries. However, as a matter of course, it is preferable to set the value to be infinitely close to substantially zero. As described above, in the meaning of the standard for concentrations of emissions, a value below "predetermined value" may be referred to as "permissible value" or "emission standard value."

The invention according to Claim 12 is characterized in that, in Claim 1 or 6, the catalyst oxidizes carbon monoxide and reduces nitrogen oxides, and the control device adjusts a concentration ratio of oxygen, nitrogen oxides and carbon monoxide in the gas on the primary side of the catalyst by the combustion under the first set condition, thereby decreasing the concentration of nitrogen oxides on the secondary side of the catalyst to substantially zero.

The invention according to Claim 12 exerts the effect capable of decreasing the emission of nitrogen oxides to substantially zero, in addition to the effect by Claim 1 or 6.

The invention according to Claim 13 is characterized in that, in Claim 1 or 6, the catalyst oxidizes carbon monoxide and reduces nitrogen oxides, and the control device adjusts a concentration ratio of oxygen, nitrogen oxides and carbon monoxide in the gas on the primary side of the catalyst by the combustion under the first set condition so that a concentration of carbon monoxide in the gas on the primary side of the catalyst becomes substantially equal to or more than a value obtained by adding the concentration of carbon monoxide decreased in the catalyst by the oxidation to the concentration of carbon monoxide decreased in the catalyst by the reduction.

The invention according to Claim 13 exerts the effect capable of decreasing the emission of nitrogen oxides to substantially zero and decreasing the concentration of emitted carbon monoxide, in addition to the effect by Claim 1 or 6.

The invention according to Claim 14 is characterized in that, in Claim 1 or 6, the catalyst oxidizes carbon monoxide and reduces nitrogen oxides, and the control device adjusts a concentration ratio of the gas on the primary side of the catalyst so that the concentration ration satisfies the following formula (3) by the combustion under the fist set condition.

$$([NOx] + 2[O_2])/[CO] \le 2.0 \cdots (3)$$

(In the formula (3), [CO], [NOx] and [O$_2$] respectively show a concentration of carbon monoxide, a concentration of nitrogen oxides, and a concentration of oxygen, and satisfy a condition of [O$_2$] > 0.)

The invention according to Claim 14 exerts the effect capable of decreasing the emission of nitrogen oxides to substantially zero and decreasing the concentration of emitted carbon monoxide, in addition to the effect by Claim 1 or 6.

[Effects of the Invention]

According to the present invention, a great amount of carbon monoxide can be prevented from being emitted to the atmosphere at combustion initiation of a burner and at a time of change in a combustion amount by simple means.

[Description of the Reference Symbols]

1:      Burner
4:      Catalyst
8:      Controller
28:     Air-ratio adjusting device
29:     Damper
30:     Damper position adjusting device
31:     Temperature sensor

[Brief Description of the Drawings]

[FIG. 1] A longitudinal sectional view for explaining a steam boiler of Embodiment 1.
[FIG. 2] A sectional view taken along line II to II in FIG. 1.
[FIG. 3] A view showing a constitution of major parts when a catalyst given in FIG. 2 is viewed from a direction in which exhaust gas flows.

[FIG. 4] A drawing showing the characteristics of air ratio-NOx/CO in Embodiment 1.

[FIG. 5] A partial sectional view for explaining a damper position adjusting device of Embodiment 1, which is in operation.

[FIG. 6] A sectional view for explaining major parts of the damper position adjusting device.

[FIG. 7] A pattern diagram for explaining the characteristics of a burner and endothermic device and those of a catalyst given in Embodiment 1.

[FIG. 8] A drawing for explaining the output characteristics of the sensor given in Embodiment 1.

[FIG. 9] A drawing for explaining the motor controlling characteristics in Embodiment 1.

[FIG. 10] A drawing for explaining the NOx and CO decreasing characteristics in Embodiment 1.

[FIG. 11] A flow chart illustrating the control at combustion initiation in Embodiment 1.

[FIG. 12] A time chart illustrating the control at combustion initiation in Embodiment 1.

[FIG. 13] A longitudinal sectional view for explaining a steam boiler of Embodiment 2.

[FIG. 14] A flow chart illustrating the control at combustion initiation in Embodiment 2.

[FIG. 15] A time chart illustrating the control at a time of change in a combustion amount in Embodiment 3.

[FIG. 16] A view illustrating the control of an air ratio of the control at a time of change in a combustion amount in Embodiment 3.

[FIG. 17] A time chart illustrating the control at a time of change in a combustion amount in Embodiment 4.

[FIG. 18] A view illustrating the control of an air ratio of the control at a time of change in a combustion amount in Embodiment 4.

[FIG. 19] A longitudinal sectional view for explaining a steam boiler of Embodiment 5.

[FIG. 20] A drawing for explaining the motor controlling characteristics in Embodiment 5.

[FIG. 21] A drawing showing the characteristics of air ratio-NOx/CO in Embodiment 6.

[FIG. 22] A longitudinal sectional view for explaining a steam boiler of Embodiment 7.

[Best Mode for carrying out the Invention]

Next, an explanation will be given for embodiment modes of the present invention. An explanation will be made for terms used in the present application before the embodiment modes of the present invention will be explained. "Gas" refers to gas before completely passing from a burner through an oxidation catalyst, and gas, which has passed through the oxidation catalyst, is referred to as "exhaust gas." Therefore, the gas includes that in which burning reactions have been in progress (combustion process) and that in which the burning reactions have been completed, and is also referred to as combustion gas. In this instance, where the oxidation catalyst is installed in multiple stages along the gas flow, the "gas" is defined as gas before completely passing through the oxidation catalyst at a final stage, and "exhaust gas" is defined as gas after passing through the oxidation catalyst at the final stage.

Further, "a primary side of the oxidation catalyst" is a side where a burner is installed with respect to an oxidation catalyst, referring to immediately before the passage of gas through the oxidation catalyst unless otherwise specified, whereas "a secondary side of the oxidation catalyst" is a side opposite to the primary side of the oxidation catalyst. Still further, an air ratio m is defined as $m = 21/ (21 - [O_2]$. Note that $[O_2]$ represents the concentration of oxygen in exhaust gas, but $[O_2]$ used in determining an air ratio represents the concentration of excess oxygen in an oxygen excess region and also represents as a negative value the concentration of insufficient oxygen necessary for burning unburned gas such as carbon monoxide at the air ratio of $m = 1$ in a fuel excess region. Further, "free of hydrocarbons" does not mean that hydrocarbons will not be generated at all in a process of burning reactions but means that hydrocarbons are generated to some extent during the process of burning reactions but hydrocarbons which reduce nitrogen oxides are not substantially contained (a measurement limit or lower) in gas flowing into the oxidation catalyst at a stage where the burning reactions are completed.

Next, an explanation will be made for embodiment modes 1 to 5 of the present invention. The present invention is applicable to a water-tube boiler such as a small through-flowboiler, a hot-water supply system and a combustion apparatus (also referred to as a thermal component or a combustion device) such as a regenerator for an absorption refrigerator.

(Embodiment Mode 1)

Embodiment Mode 1 is a combustion apparatus preventing carbon monoxide in an amount equal to or more than a reference emission amount from being emitted to the atmosphere at combustion initiation by simple means. Embodiment Mode 1 is a combustion apparatus including a burner for generating gas by combustion, an endothermic device for absorbing heat from the gas, an oxidation catalyst (hereinafter, referred to as a catalyst) for oxidizing at least carbon monoxide in the gas after the passage through the endothermic device, and a control device for controlling the combustion of the burner to a first set condition at initiation so that the concentration of carbon monoxide in the gas on a primary side of the catalyst becomes a first set value at initiation, in which the control device performs a control at combustion initiation for suppressing the generation and/or emission of carbon monoxide at combustion initiation of the burner. The control at combustion initiation includes the suppression of the generation of carbon monoxide, the suppression of the emission of carbon monoxide, or both of them.

The control at combustion initiation can be preferably configured so as to control the combustion of the burner to a second set condition at initiation in such a manner that the concentration of carbon monoxide on a primary side of the catalyst becomes a second set value at initiation lower than the first set value at initiation. Here, the combustion initiation refers to a time when combustion is started again after the stop of combustion.

In Embodiment Mode 1, the burner conducts combustion under the first set condition at initiation by the control device. Gas generated by combustion contains carbon monoxide in an adjusted concentration. After the gas is subjected to an endothermic function by the endothermic device, carbon monoxide is oxidized by the catalyst. Consequently, the emission amount of carbon monoxide in the gas can be decreased to a reference emission value or less. In this function, at combustion initiation of the burner, the control device first sets the combustion condition to be the second set condition at initiation, decreases the concentration of carbon monoxide in the gas, and thereafter, returns the combustion condition to the first set condition at initiation. Thus, a great amount of carbon monoxide is prevented from being emitted.

The control device can be preferably configured so as to perform preheating of increasing a temperature of the catalyst to an activation temperature by combustion under the second set condition at initiation. Thus, the effect not requiring means for preheating the catalyst separately is exerted.

Further, the change in the first set condition at initiation and the second set condition at initiation by the control device is configured preferably so as to change the air ratio of the burner.

Further, it is desired that the air ratio under the second set condition at initiation is an air ratio at which the concentration of carbon monoxide on a primary side of the catalyst becomes the reference emission value or less.

Further, the control at combustion initiation canbe configured so as to provide a heating device of the catalyst instead of performing preheating by combustion under the second set condition at initiation, and preheat the catalyst with the heating device before the combustion initiation of the burner, thereby suppressing the emission of carbon monoxide. As the heating device of the catalyst, an electric heater can be used, but the heating device is not limited thereto.

(Embodiment Mode 2)

Embodiment Mode 2 is a combustion apparatus preventing carbon monoxide from being emitted to the atmosphere in an amount equal to or more than a reference emission amount at a time of change in a combustion amount by simple means. Embodiment 2 is a combustion apparatus including a burner, an endothermic device for absorbing heat from gas generated by the burner, a catalyst for oxidizing at least carbon monoxide, and a control device for controlling the combustion of the burner to a first set condition at a time of change (which can also be referred to as a third set condition) so that the concentration of carbon monoxide in the gas on a primary side of the catalyst becomes a first set value at a time of change (which can also be referred to as a third set value), characterized in that the burner is capable of switching the combustion amount between a first combustion amount and a second combustion amount, and the control device performs the control at a time of change in a combustion amount of suppressing the generation of carbon monoxide during change of the combustion amount from the first combustion amount to the second combustion amount and vice versa.

The control at a time of change in a combustion amount can be preferably configured so as to control the combustion of the burner to a second set condition at a time of change (which can also be referred to as a fourth set condition) and thereafter, shift the second set condition at a time of change to the first set condition at a time of change in such a manner that the concentration of carbon monoxide on a primary side of the catalyst becomes a second set value at a time of change (which can also be referred to as a fourth set value) lower than the first set value at a time of change.

Further, the change in the first set condition at a time of change and the second set condition at a time of change by the control device is preferably configured so as to change the air ratio of the burner (first change control). Further, the change in the first set condition at a time of change and the second set condition at a time of change by the control device can be configured so as to perform the control of shifting the timing of the supply of a fuel from the timing of the supply of combustion air (air for combustion) so that an air ratio is increased, instead of changing an air ratio. Further, the change in the first set condition at a time of change and the second set condition at a time of change by the control device can be configured so that a combination of the first change control and the second change control is performed.

In Embodiment Mode 2, the burner conducts combustion by the control device under the first set condition at a time of change. Gas generated by the combustion and subjected to the endothermic function by the endothermic device contains carbon monoxide in an adjusted concentration. The gas comes into contact with the catalyst, whereby carbon monoxide is oxidized. As a result, the emission amount of carbon monoxide in the gas can be decreased to a reference emission value or less. In this function, at a time of change in the combustion amount of the burner, the control device first sets the combustion condition to the second set condition at a time of change, conducts combustion in which the generation amount of carbon monoxide in the gas is small, and thereafter, returns the combustion condition to the first set condition at a time of change in which the generation amount of carbon monoxide is large. Thus, at a time of change in a combustion amount, a great amount of carbon monoxide is prevented from being emitted.

Embodiment Modes 1 and 2 of the invention as described above are performed preferably in Embodiment Modes 3 and 4 as described below, and Embodiment Modes 1 and 2 can be performed even in Embodiment Mode 5 as described below.

(Embodiment Mode 3)

Embodiment Mode 3 decreases the concentrations of nitrogen oxides and carbon monoxide by the catalyst. In Embodiment 3, the control device adjusts the concentration ratio of oxygen, nitrogen oxides and carbon monoxide in gas on a primary side of the catalyst to a predetermined concentration ratio at which the concentration of nitrogen oxides on a secondary side of the catalyst is decreased to substantially zero or a predetermined value or less, and the concentration of carbon monoxide is decreased to substantially zero or a predetermined value or less by combustion under the first set condition at initiation or the first set condition at a time of change.

(Embodiment Mode 4)

In Embodiment Mode 4, the control device performs the concentration ratio adjustment of adjusting the concentration ratio K of oxygen, nitrogen oxides and carbon monoxide in gas on a primary side of the catalyst by combustion under the first set condition at initiation or the first set condition at a time of change. The concentration ratio adjustment is either of Adjustment 0, Adjustment 1, and Adjustment 2 as described below.

Adjustment 0: the concentration ratio K is adjusted to a predetermined reference concentration ratio K0 in which the concentration of nitrogen oxides and that of carbon monoxide on the secondary side of the catalyst are decreased to substantially zero.

Adjustment 1: the concentration ratio K is adjusted to a first predetermined concentration ratio K1 in which the concentration of nitrogen oxides on the secondary side of the catalyst is decreased to substantially zero and that of carbon monoxide is decreased to a value equal to or lower than a predetermined value.

Adjustment 2: the concentration ratio K is adjusted to a second predetermined concentration ratio K2 in which the concentration of carbon monoxide on the secondary side of the catalyst is decreased to substantially zero and that of nitrogen oxides is decreased to a value equal to or lower than a predetermined value.

Then, the catalyst is characterized in that it decreases the concentration of nitrogen oxides and that of carbon monoxide on the secondary side of the catalyst to substantially zero when Adjustment 0 is made, decreasing the concentration of nitrogen oxides on the secondary side of the catalyst to substantially zero and decreasing that of carbon monoxide to a value equal to lower than a predetermined value when Adjustment 1 is made, and decreasing the concentration of carbon monoxide on the secondary side of the catalyst to substantially zero and decreasing that of nitrogen oxides to a value equal to lower than a predetermined value when Adjustment 2 is made.

In Embodiment Mode 4, the concentration ratio means a mutual relationship between the concentration of carbon monoxide, that of nitrogen oxides and that of oxygen. A preferably predetermined reference concentration ratio K0 of Adjustment 0 is determined by the following formula (1), and preferably set in such a manner that it satisfies the following formula (2), the first predetermined concentration ratio K1 is made smaller than the predetermined reference concentration ratio and the second predetermined concentration ratio K2 is made larger than the predetermined reference concentration ratio.

$$([NOx] + 2[O_2])/[CO] = K \cdots (1)$$

$$1.0 \leq K = K0 \leq 2.0 \qquad \cdots (2)$$

(In formula (1), [CO], [NOx] and [O$_2$] denote the respective concentrations of carbon monoxide, nitrogen oxides and oxygen, and satisfying the condition of [O$_2$] > 0.)

The predetermined reference concentration ratio K0 is a concentration ratio of oxygen, nitrogen oxides and carbon monoxide on the primary side of the catalyst in which the concentration of oxygen, that of nitrogen oxides and that of carbon monoxide on the secondary side of the catalyst are decreased to substantially zero. Formula (1) is to determine the predetermined reference concentration ratio K0, and formula (2) indicates conditions for decreasing the concentration of oxygen, that of nitrogen oxides and that of carbon monoxide on the secondary side of the catalyst to substantially zero. Theoretically, each of these concentrations can be decreased to zero under the condition of K0 = 1.0. However, experimental results have confirmed that each of the concentrations can be decreased to substantially zero within a scope of formula (2) and an upper limit of the K0, 2.0, may be a value greater than 2.0, depending on characteristics of the catalyst.

When a concentration ratio K on the primary side of the catalyst is adjusted so that it is lower than the predetermined reference concentration ratio K0, in other words, K in formula (1) is given as the first predetermined concentration ratio K1, which is smaller than K0 (Adjustment 1), the concentration of oxygen and that of nitrogen oxides on the secondary side of the catalyst are decreased to substantially zero and the concentration of carbon monoxide is decreased to a value equal to lower than a predetermined value. The predetermined value of the concentration of carbon monoxide is preferably set to be an emission standard value (since this value is different depending on countries, it may be changed in each of the countries) or lower. Upon determination of the predetermined value, it is possible to determine experimentally the first predetermined concentration ratio K1. More specifically, such adjustment of the concentration ratio K that a value of the concentration ratio K is given as the first predetermined concentration ratio K1, which is smaller than K0, can be made by making smaller a ratio of the concentration of oxygen to that of carbon monoxide on the primary side of the catalyst than a ratio of the concentration of oxygen to that of carbon monoxide, which satisfies the predetermined reference concentration ratio K0.

Further, a concentration ratio K on the primary side of the catalyst is adjusted in such a manner that the concentration ratio K will be the second predetermined concentration ratio K2, which is greater than K0, (Adjustment 2), thereby the concentration of carbon monoxide on the secondary side of the catalyst is decreased to substantially zero and that of nitrogen oxides is decreased to a value equal to or lower than a predetermined value. In this instance, the concentration of oxygen on the secondary side of the catalyst will be a predetermined concentration. A predetermined value of the concentration of nitrogen oxides is different from the predetermined value of the concentration of carbon monoxide and preferably equal to or lower than an emission standard value determined in various countries. Upon determination of the predetermined value, it is possible to determine experimentally the second concentration ratio K2. More specifically, such adjustment of the concentration ratio K to give the second predetermined concentration ratio K2 can be made by making the ratio of the concentration of oxygen to that of carbon monoxide greater on the primary side of the catalyst than a ratio of the concentration of oxygen to that of carbon monoxide, which satisfies the predetermined reference concentration ratio K0.

Embodiment Mode 4 preferably has a concentration ratio constant control of keeping constant the concentration ratio K at each of the predetermined concentration ratios K0, K1 and K2.

In Embodiment Mode 4, at first, combustion is affected in the burner to generate gas free of hydrocarbons but containing oxygen, nitrogen oxides and carbon monoxide. Then, a concentration ratio K of oxygen, nitrogen oxides and carbon monoxide in the gas on the primary side of the catalyst is each adjusted to the predetermined reference concentration ratio K0, the first predetermined concentration ratio K1 or the second predetermined concentration ratio K2 in the concentration ratio adjustment, according to any one of Adjustment 0, Adjustment 1 and Adjustment 2. Then, the gas is in contact with the catalyst, by which carbon monoxide is oxidized by oxygen in the gas and nitrogen oxides are reduced by carbon monoxide. Where Adjustment 0 or Adjustment 1 is made, a role of oxygen in the hazardous-substance decreasing action is to adjust the concentration of carbon monoxide, in other words, consuming and decreasing carbon monoxide, which is excessively available in reduction of nitrogen oxides to decrease the concentration to substantially zero. According to the hazardous-substance decreasing action after Adjustment 0 or Adjustment 1, the amount of emitted nitrogen oxides in the gas is decreased to substantially zero, and the amount of emitted carbon monoxide is decreased to substantially zero or a value equal to or lower than a predetermined value. Further, according to the hazardous-substance decreasing action after Adjustment 2, the amount of emitted carbon monoxide in the gas is decreased to substantially zero and the concentration of nitrogen oxides is also decreased to a value equal to or lower than a predetermined value. Still further, according to the concentration ratio constant control, a change is suppressed in each of the predetermined concentration ratios K0, K1 and K2, thus making it possible to secure the effects of decreasing amounts of emitted nitrogen oxides and carbon monoxide. In particular, in Adjustment 0, the concentration ratio constant control is important to decrease the amount of emitted nitrogen oxides to substantially zero.

A predetermined reference concentration ratio K0 of Adjustment 0 and a first predetermined concentration ratio K1 of Adjustment 1 can be collectively expressed by the following formula (3). In other words, when formula (3) is satisfied, the concentration of nitrogen oxides on the secondary side of the catalyst is decreased to substantially zero, and the concentration of carbon monoxides on the secondary side of the catalyst is decreased to substantially zero, otherwise the concentration of carbon monoxide is decreased. In order to decrease the concentration of carbon monoxide to a value equal to or lower than the predetermined value, the concentration ratio K on the primary side of the catalyst is adjusted so that a value of the concentration ratio K will be a value smaller than K0, thereby obtaining the first predetermined concentration ratio K1.

$$([NOx] + 2[O_2])/[CO] = K \leq 2.0 \quad \cdots (3)$$

(in the formula (3), [CO], [NOx], and $[O_2]$ represent the concentrations of carbon monoxide, nitrogen oxides, and oxygen, respectively, and satisfying the condition of $[O_2] > 0$.)

An explanation will be further made for hazardous-substance decreasing actions due to the catalyst. The decreasing actions may be conducted in the following procedures. The catalyst undergoes a first reaction for oxidizing carbon monoxide and a second reaction for reducing nitrogen oxides by carbon monoxide as main reactions. Then, in reactions of the catalyst (catalyst reactions), the first reaction is predominant over the second reaction in the presence of oxygen. Thus, carbon monoxide is consumed by oxygen on the basis of the first reaction and adjusted for the concentration and nitrogen oxides are thereafter reduced by the second reaction. This is a simplified explanation. In reality, the first reaction is competitive with the second reaction. However, since the reaction of carbon monoxide with oxygen takes place apparently faster than the second reaction in the presence of oxygen, it is considered that carbon monoxide is oxidized at a first stage (first reaction) and nitrogen oxides are reduced (second reaction) at a second stage.

Briefly, in the catalyst, oxygen is consumed by the first reaction of $CO + 1/2O_2 \rightarrow CO_2$ in the presence of oxygen and remaining CO is used to reduce nitrogen oxides by the second reaction of $2CO + 2NO \rightarrow N_2 + 2CO_2$, thereby decreasing the concentration of emitted nitrogen oxides.

In this case, [NOx] in formula (2) is a total of the concentration of nitric monoxide [NO] and that of nitric dioxide $[NO_2]$. In the explanation on the reaction formulae, NO is used in place of NOx to make a similar explanation, because nitrogen oxides generated at high temperatures are constituted mainly with NO, with only a few percentages taken up by $NO_2$. $NO_2$, if present, is considered to be reduced by CO in a similar manner as NO.

**[0069]** Where the concentration ratio K is 1.0, it is theoretically possible to decrease to zero the concentrations of oxygen, nitrogen oxides and carbon monoxide emitted from the catalyst. However, carbon monoxide is experimentally found to be emitted in a slight amount. Then, a formula of $([NOx] + 2[O_2])/[CO] = 1$ has been theoretically derived from the first reaction and the second reaction, with the experimental results taken into account.

In this case, an explanation will be made for how to derive the formula of $([NOx] + 2[O_2])/[CO] = 1$. Since the formula satisfies typically the predetermined reference concentration ratio K0, it is referred to as a predetermined reference concentration satisfying formula.

It is known that the first reaction (I) takes place as a main reaction inside the catalyst.

$$CO + 1/2O_2 \rightarrow CO_2 \quad \cdots (I)$$

Further, inside the catalyst in which a precious metal catalyst such as Pt is used, NO reduction reaction due to CO resulting from the second reaction (II) will proceed in oxygen-absent atmosphere.

$$CO + NO \rightarrow CO_2 + 1/2N_2 \quad \cdots (II)$$

Therefore, with attention given to the concentration of a substance contributing to the first reaction (I) and the second reaction (II), the referenced concentration satisfying formula has been derived.

More specifically, when the concentration of CO, that of NO and that of $O_2$ are respectively given as [CO] ppm, [NO] ppm and $[O_2]$ ppm, the concentration of oxygen, which can be removed by CO on the basis of formula (I), is expressed by the following formula (III).

$$2[O_2] = [CO]_a \quad \cdots (III)$$

Further, in order to have a reaction expressed by formula (II), CO is needed in an amount equal to that of NO, thus establishing a relationship expressed by the following formula (IV).

$$[CO]_b = [NO] \cdots (IV)$$

where the reactions expressed by formulae (1) and (II) are allowed to occur continuously inside the catalyst, a concentration relationship expressed by the following formula (V) is needed, which can be obtained by combining formula (III) with formula (IV).

$$[CO]_a + [CO]_b = 2[O_2] + [NO] \cdots (V)$$

Since $[CO]_a$ + $[CO]_b$ are the same component, they can be expressed as [CO] in terms of the concentration of CO in gas on the secondary side of the catalyst.

Thus, the predetermined reference concentration ratio satisfying formula, that is, a relationship expressed by [CO] = 2 $[O_2]$ + [NO] can be obtained.

Where the concentration ratio K is smaller than 1.0, the concentration of carbon monoxide is available in excess in reducing the nitrogen oxides. Therefore, the concentration of emitted oxygen is decreased to zero and carbon monoxide remains in gas after passing through the catalyst.

Further, the concentration ratio K of 2.0, which exceeds 1.0, may be due to the following reasons, although the value has been obtained experimentally. Reactions taking place in the catalyst have not been completely elucidated, and there may be possibilities that auxiliary reactions may take place, in addition to the main reactions of the first and the second reactions. One of the auxiliary reactions may be that in which steam reacts with carbon monoxide to produce hydrogen, which may result in a reduction of nitrogen oxides and oxygen.

Next, an explanation will be made for constituents of Embodiment Modes 1 to 4 of the present invention. The burner is preferably a primary aerated-type premixed burner at which fuel gas is previously mixed and burned. In order to effectively conduct the first reaction and the second reaction in the catalyst, it is important to adjust the concentration ratio K, which is shown in formulae (2) and (3) on oxygen, nitrogen oxides, and carbon monoxide. A premixed burner is used as the burner, thereby making it possible to relatively easily obtain the predetermined reference concentration ratio K0 in a low air ratio region. However, oxygen, nitrogen oxides, and carbon monoxide in gas on the primary side of the catalyst are uniformly mixed and controlled so as to obtain the individual concentrations as the predetermined concentration ratios, thus making it possible to use a partially premixed burner or a previously-mixed burner other than a premixed burner. Further, assuming that the oxygen concentration $O_2$ on a primary side of the catalyst is 0% < $O_2$ ≤ 1.00% under the condition satisfying the formulae (2) and (3), the air ratio becomes substantially 1.0, and energy saving is realized in addition to low NOx and low CO in which emission concentration is close to zero, whereby an energy-saving combustion apparatus with a low pollution can be provided.

The endothermic device is preferably a water tube group constituting a storage water heater body such as a boiler. The embodiment mode of the endothermic device includes a first aspect (corresponding to Patent Documents 1 and 2) in which little combustion space is provided immediately close to the burner and a water tube group is arranged inside the combustion space and a second aspect having the combustion space between the burner and the water tube group. In the first aspect, burning reactions are in progress at a clearance between the water tube groups. The water tube group is a plurality of water tubes for exchanging heat with gas resulting from the burner. Such a constitution is also available that one water tube is meandered to form a plurality of water tubes as with water tubes used in a water heater.

The endothermic device is able to absorb heat from gas generated by the burner to utilize the heat, and have functions controlling the temperature of the gas to a temperature close to that of activating the oxidation catalyst and also suppressing it to a temperature equal to or lower than that of preventing thermal deterioration, in other words, controlling the temperature of the gas to the temperature to allow the first and the second reactions to take place effectively and prevent thermal deterioration, with the durability taken into account. Further, the endothermic device can be allowed to function as means for preventing the gas temperature from elevating to 900°C or higher, thus stopping the oxidation of carbon monoxide, and keeping unchanged a concentration ratio in gas from the burner.

The concentration ratio adjustment by the burner and by the concentration ratio adjustment the endothermic device are performed by obtaining the characteristics air ratio-NOx/CO based on experimental data. The concentration ratio adjustment adjusts the concentration of nitrogen oxides on a secondary side of the catalyst to substantially zero and a predetermined value or less and the concentration of carbon monoxide on the secondary side of the catalyst to substantially zero and a predetermined value or less by controlling the concentration ratio K of oxide, nitrogen oxides and carbon monoxide on a primary side of the catalyst to the predetermined concentration ratio using the air-ratio adjusting device for adjusting the ratio between the combustion amount of the burner and the combustion air amount based on the concentration ratio characteristics of the burner and the endothermic device. Then, the concentration ratio adjustment adjusts the concentration ratio K on the primary side of the catalyst to the predetermined reference concentration ratio K0, the first predetermined concentration ratio K1, and the second predetermined concentration ratio K2. The adjustment can be conducted by using the following first and second concentration ratio adjusting devices. The first and second concentration ratio adjusting devices preferably adjust the concentration ratio by the air-ratio adjusting device of adjusting the ratio between the combustion amount of the burner and the combustion air amount.

The first concentration ratio adjusting device is to utilize the characteristics of the burner in adjusting the concentration ratio K and also utilize the characteristics of the endothermic device arranged between the burner and the catalyst to absorb heat from the gas, that is, utilizing the concentration ratio characteristics of the burner and the endothermic device. The concentration ratio characteristics are such characteristics to effect combustion in the burner by allowing an air ratio to change, by which the concentration of carbon monoxide and that of nitrogen oxides are changed after complete or partial passage through the endothermic device. Further, the concentration ratio characteristics are in principle determined by the concentration ratio characteristics of the burner, and the endothermic device is typically provided with functions to partially change the concentration ratio characteristics of the burner or retaining the concentration ratio characteristics. Where the endothermic device is given as the first aspect, gas during burning reactions is cooled to increase the concentration of carbon monoxide and also to suppress the concentration of nitrogen oxides. Where the endothermic device is given as the second aspect, the concentration ratio characteristics by the burner are typically retained, with most of the characteristics kept as they are.

Where the first concentration ratio adjusting device is used to adjust the concentration ratio K, no adjustment for concentration ratio is needed other than that by the burner or the endothermic device, thereby making an apparatus simple in constitution. Further, the endothermic device can be used to suppress temperatures of the gas, thereby providing the effects of improving the durability of the catalyst.

In the second concentration ratio adjusting device, the concentration ratio K is adjusted by utilizing the concentration ratio characteristics of the burner and endothermic device arranged between the burner and the catalyst to absorb heat from the gas and through the use of the auxiliary adjusting device arranged between the burner and the catalyst.

The auxiliary adjusting device is arranged between the burner and the catalyst (including a part of the endothermic device) and provided with auxiliary functions to make the adjustment by feeding carbon monoxide or adsorbing and removing oxygen, thereby increasing a concentration ratio of carbon monoxide to oxygen. The auxiliary adjusting device includes a CO generator and an auxiliary burner capable of adjusting an amount of oxygen or CO in exhaust gas.

Where the second concentration ratio adjusting device is used to adjust the concentration ratio, the concentration ratio is adjusted by using the auxiliary adjusting device, in addition to the concentration ratio characteristics of the burner and the endothermic device. Therefore, the burner and the endothermic device are not limited to a specially structured burner but applicable to a wider application.

The concentration ratio adjustment by the concentration ratio adjusting device can be expressed as an adjustment of adjusting the concentration of carbon monoxide in the gas on a primary side of the catalyst to substantially equal to or more than a value obtained by adding the concentration of carbon monoxide decreased in the catalyst by oxidation of carbon monoxide to the concentration of carbon monoxide decreased in the catalyst by reduction of nitrogen oxides by carbon monoxide. In the case where the concentration ratio adjustment is impossible, the concentration ratio adjustment by the concentration ratio adjusting device can be configured so as to perform the adjustment by the injection of carbon monoxide and the injection of oxygen.

In the concentration ratio, it is preferred that the air ratio is controlled to a low air ratio of substantially 1.0, because energy saving can be achieved. Further, the concentration ratio adjustment is performed preferably by suppressing the amount of nitrogen oxides and the amount of carbon monoxide to a predetermined amount or lower by adjusting a combustion temperature, and by preventing the obtained concentration of carbon monoxide from being decreased by keeping the gas temperature. Carbon monoxide is likely to be oxidized at a gas temperature of about 900°C or higher. Therefore, the burner and the endothermic device are constituted preferably so that the gas temperature on a primary side of the catalyst is kept at 600°C or lower.

The catalyst has a function of reducing effectively the nitrogen oxides in a state that no hydrocarbons are contained in the gas. The catalyst is installed downstream from the endothermic device or on its way to the endothermic device and structured so as to hold a catalyst activating substance on a breathable matrix. The matrix includes metals such as stainless steel and ceramics to which surface treatment is given so as to widen the area which is in contact with exhaust gas. In general, the catalyst activating substance includes platinum and may include precious metals such as Ag, Au, Rh, Ru, Pt and Pd, a typical example of which is platinum or metal oxides depending on the practical use. Where the catalyst is installed on its way to the endothermic device, it is installed on a clearance between endothermic device such as a plurality of water tubes. Such a structure is also available that the endothermic device is used as a matrix to hold a catalyst activating substance on the surface thereof.

The air-ratio adjusting device includes flow rate adjusting device, a motor for driving the flow rate adjusting device and a controller for controlling the motor. The flow rate adjusting device is means for changing either or both of an amount of combustible air and an amount of fuel in the burner to change a ratio of air to fuel, thereby adjusting the air ratio in the burner. An adjuster of the amount of combustible air is preferably a damper (including the meaning of a valve). The damper includes a structure such as a rotational type in which a valve body rotating at the center of a rotating shaft is used to change an aperture of a flow channel or a slide type which slides on a cross-section opening of a flow channel to change an aperture of the flow channel.

Where the flow rate adjusting device is a device for changing an amount of combustible air, it is preferably installed on an air flow channel between a blower and fuel supply device. It may be also installed on a suction opening of the blower such as a suction opening of the blower.

The motor is preferably means for driving the flow rate adjusting device and shall be a motor capable of controlling an aperture extent of the flow rate adjusting device depending on a driving amount and also adjusting a driving amount per unit time. The motor partially constitutes mechanical control device for attaining a stable control of the air ratio. "Capable of controlling an aperture extent depending on a driving amount" means that an aperture of the flow rate adjusting valve can be controlled so as to halt at a specific position by determining the driving amount. Further, "capable of adjusting a driving amount per unit time" means that position control can be adjusted for responsiveness.

The motor is preferably a stepping motor (which can be also referred to as a step motor) and also includes a gear motor (which can be also referred to as a geared motor) and a servo motor. Where the stepping motor is used, the driving amount is decided by driving pulse, the driving amount is decided by driving pulse, and an aperture position of the flow rate adjusting device is subjected to opening and closing movement only by an extent depending on the number of driving pulses from a reference aperture position, by which a halt position can be controlled to any desired position. Further, where the gear motor or the servo motor is used, the driving amount is determined by opening/closing driving time, and an aperture position of the flow rate adjusting device is subjected to opening and closing movement only by an extent depending on the opening/closing driving time from a reference aperture position, by which a halt position can be controlled to any desired position.

The flow rate adjusting device of the air-ratio adjusting device may be that in which a motor mounted on a blower is controlled by an inverter. The inverter may be made with a known constitution. Also where the inverter is used, control may be provided depending on the air ratio control program used in controlling a damper.

Such an oxygen densitometer can be favorably used as the sensor that expresses an excess oxygen concentration in an oxygen excess region and expresses an insufficient oxygen concentration necessary for burning unburned gas such as carbon monoxide at an air ratio of m = 1.0 in a fuel excess region as a negative value. Further, the sensor may be that in which an oxygen concentration sensor may be combined with a carbon monoxide concentration sensor to obtain an approximate air ratio. The above-mentioned sensor is preferably installed on the secondary side of the catalyst but shall not be limited thereto. Where an exhaust heat recovery system is installed on the primary side of the catalyst or the downstream side of the catalyst, the sensor may be installed on the downstream side.

(Control device of Embodiment Mode 1)

The control device of the Embodiment Mode 1 performs, based on a previously stored air ratio control program, the first set condition at initiation for controlling the air ratio to a first set air ratio $\lambda1$ (= 1.0) at initiation so that the concentration of carbon monoxide on a primary side of the catalyst becomes the first set value at initiation by inputting a detected value of the sensor to control the driving amount of the motor, and the second set condition at initiation of controlling the air ratio to a second set air ratio $\lambda2$ (for example, 1.25) at initiation so that the concentration of carbon monoxide on the primary side of the catalyst becomes a second set value at initiation that is equal to or less than a reference emission value in order to set the concentration of carbonmonoxide on a secondary side of the catalyst to be a reference emission value or less.

The control device first starts the combustion at the second set air ratio $\lambda2$ at initiation during the combustion initiation of the burner, and preheats the catalyst by the combustion under the second set condition at initiation (preheating control). This preheating can be configured so as to be performed until the gas temperature of the outlet or inlet of the catalyst becomes a set temperature or higher. Further, the preheating also can be configured so as to be performed only for a set time. The set temperature and set time are set to be the gas temperature and time at which it is conceived that the temperature of the catalyst becomes an activation temperature (for example 260°C) from the combustion initiation of the burner. The set time is set with a margin depending on the experiment since the initial temperature of the catalyst is changed by the atmosphere temperature of the catalyst. When the gas temperature of the outlet or the inlet of the catalyst is a set temperature or the set time has elapsed, the control device shifts the combustion at the second set air ratio $\lambda2$ at initiation to the combustion at the first set air ratio $\lambda1$ at initiation. Note that the preheating also can be controlled by directly detecting the temperature of the catalyst.

During the combustion initiation of the burner, until a low catalyst temperature at the start of operation reaches the activation temperature, the catalyst cannot exhibit an intended oxidation function. This is caused by the low temperature of the catalyst. As a result, during the combustion initiation, carbon monoxide is emitted to the atmosphere in an amount exceeding the reference emission value. Then, the control device first performs the combustion at the second set air ratio λ2 at initiation, at which the generation amount of carbon monoxide is small, only for a set time, and then, allows the combustion to be conducted by changing the air ratio to the first set air ratio λ1 at initiation at which the generation amount of carbon monoxide is large, whereby a great amount of carbon monoxide is prevented from being emitted during the combustion initiation.

(Control device of Embodiment Mode 2)

The control device of Embodiment Mode 2 performs, based on a previously stored air ratio control program, the first set condition at a time of change for controlling the air ratio to a first set air ratio at a time of change so that the concentration of carbon monoxide on a primary side of the catalyst becomes the first set value at a time of change by inputting a detected value of the sensor to control the driving amount of the motor, and the second set condition at a time of change for controlling the air ratio to a second set air ratio at a time of change so that the concentration of carbon monoxide on the primary side of the catalyst becomes a second set value at a time of change. The set condition at a time of change and the set value at a time of change are respectively set for high combustion and low combustion of the burner.

The control device performs the control at a time of change in a combustion amount of suppressing the generation of carbon monoxide during the change in a combustion amount of the burner, i.e., during the shift from low combustion to high combustion and the shift from high combustion to low combustion. The control at a time of change in a combustion amount is the control of controlling the combustion of the burner to the second set condition at a time of change, and thereafter, shifting the combustion to the one under the first set condition at a time of change.

Due to the control at a time of change in a combustion amount, a great amount of carbon monoxide generated by the shift of a set air ratio during the change in a combustion amount can be prevented from leaking to be emitted.

(Embodiment Mode 5)

In Embodiment Mode 5, the concentration of carbon monoxide is mainly decreased by the catalyst. In Embodiment Mode 5, the control device is configured so as to oxidize carbon monoxide in a predetermined high concentration generated by combustion under the first set condition by the catalyst, thereby decreasing the concentration of carbon monoxide on a secondary side of the catalyst to substantially zero in Embodiment Modes 1 and 2. Embodiment Mode 5 is, as described in Patent Document 2, a combustion apparatus that performs the decrease in NOx of decreasing the value of generated NOx to a predetermined value or less by suppressing the combustion gas temperature so that the suppression of the generation of NOx is given priority over the decrease in the value of emitted CO, and thereafter, the decrease in CO of decreasing the value of emitted CO to a predetermined value or less after the decrease in NOx by a CO catalyst.

In Embodiment Mode 5, combustion is conducted for a set time under the second set condition at initiation during the combustion initiation of the burner and the change in a combustion amount of the burner, respectively, and thereafter, the combustion under the second set condition at initiation is shifted to the combustion under the first set condition at initiation, in the same way as in Embodiment Mode 1, when applied to Embodiment Modes 1 and 2. The first set air ratios λ1 under the first set condition in Embodiment Mode 5 is, for example, 1.38, and the second set air ratio λ2 under the second set condition is set to be an air ratio (for example, 1.25) at which the second set air ratio λ2 under the second set condition becomes a CO emission reference (for example, domestic reference 300 ppm or U.S. reference: 50 ppm) or less.

The present invention is not limited to Embodiment Modes 1 to 5 of the present invention, and can be a combustion apparatus obtained by combining the Embodiment Modes 1 and 2. The concentration ratio adjustment by the burner and the endothermic device includes a form conducted by elements constituting a gas passage from the burner to the catalyst other than the endothermic device and elements included in the gas passage.

[Embodiment 1]

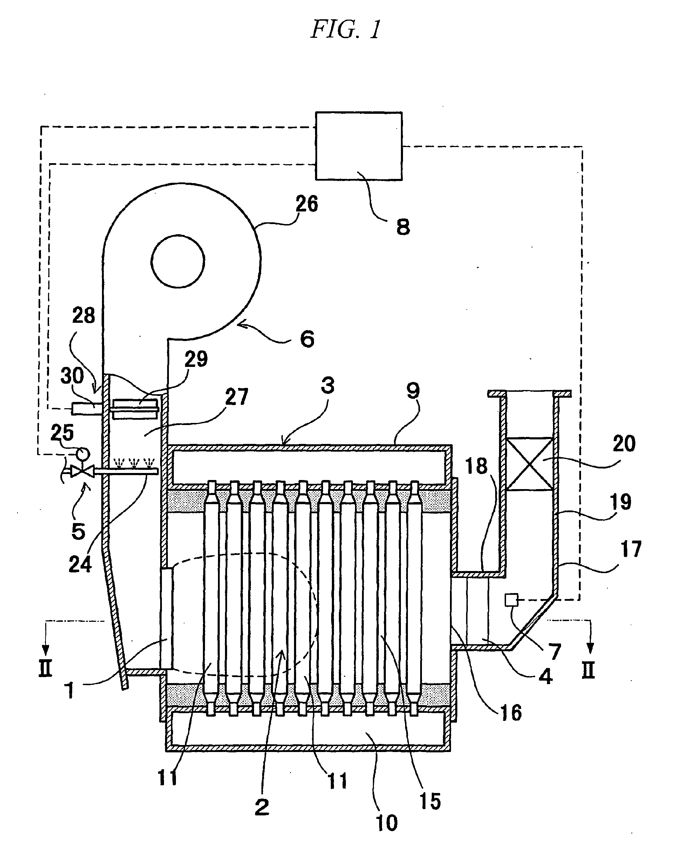

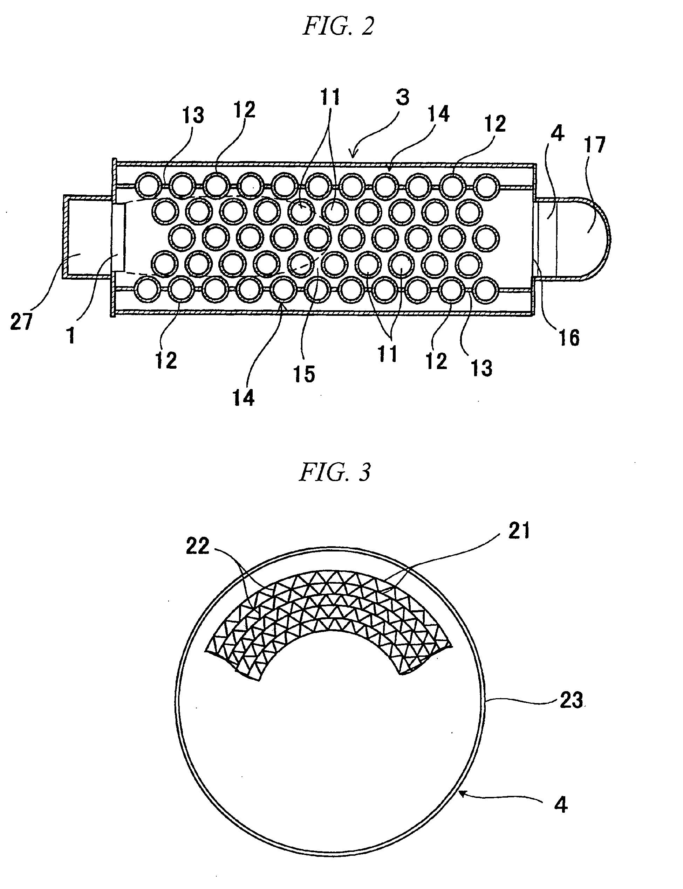

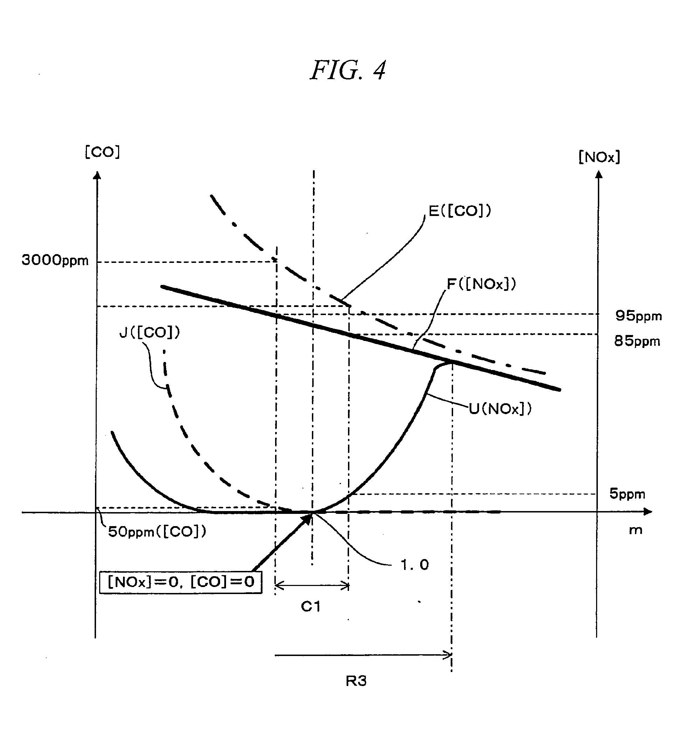

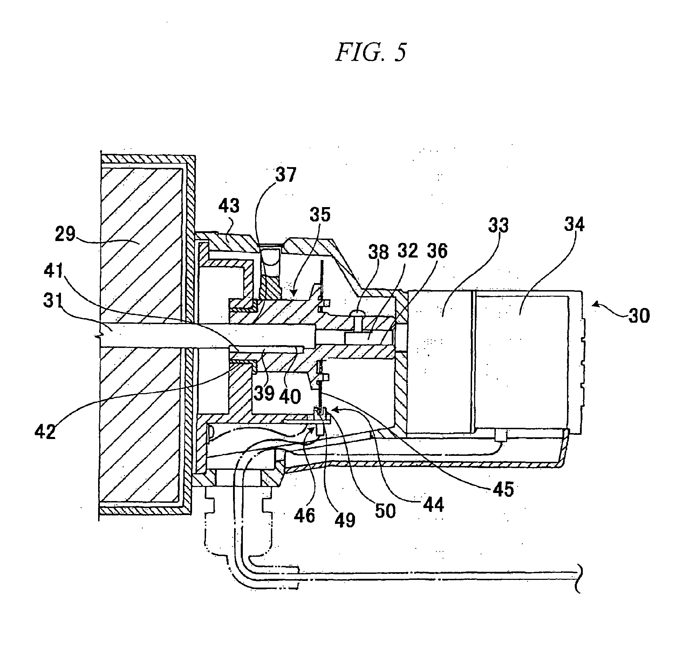

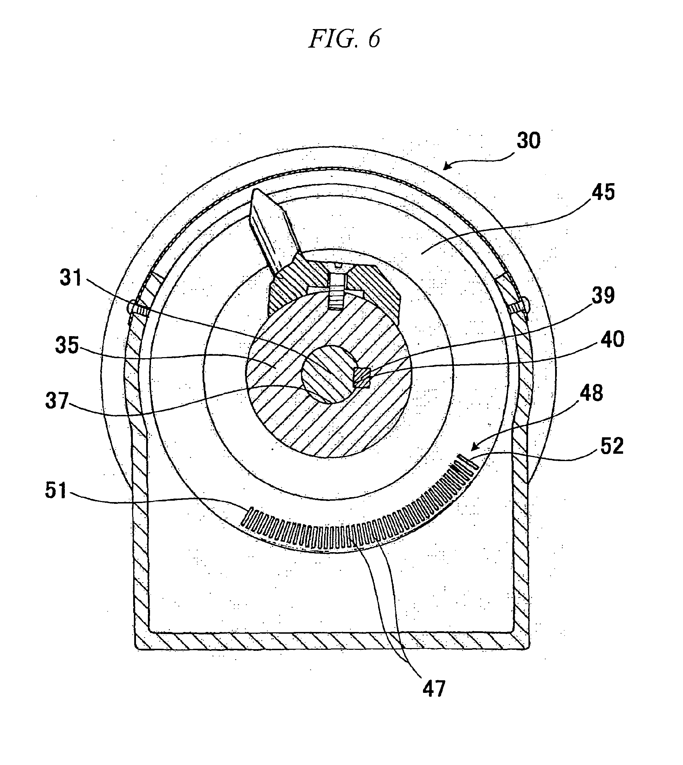

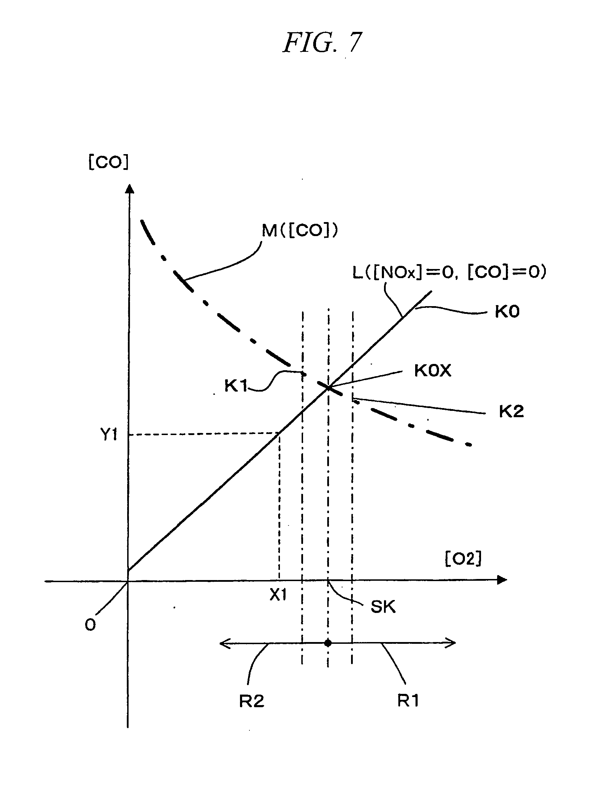

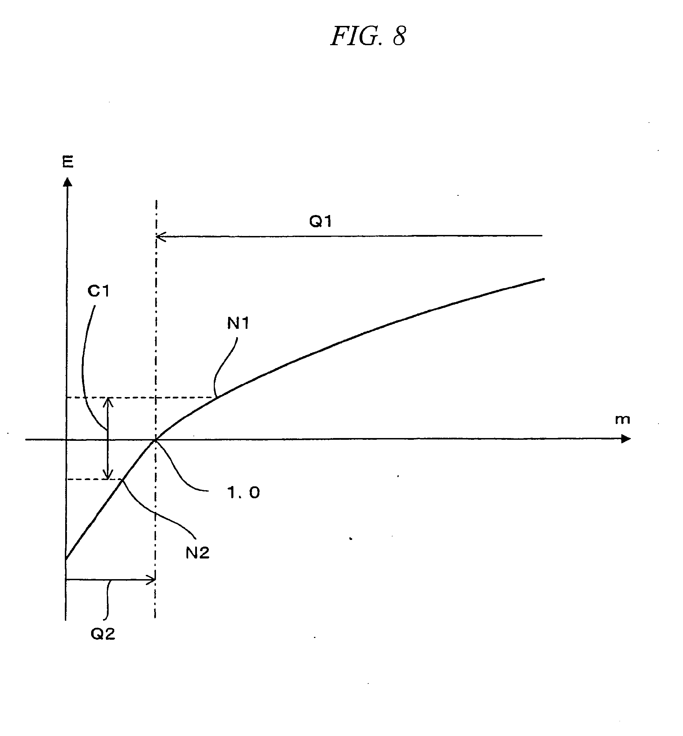

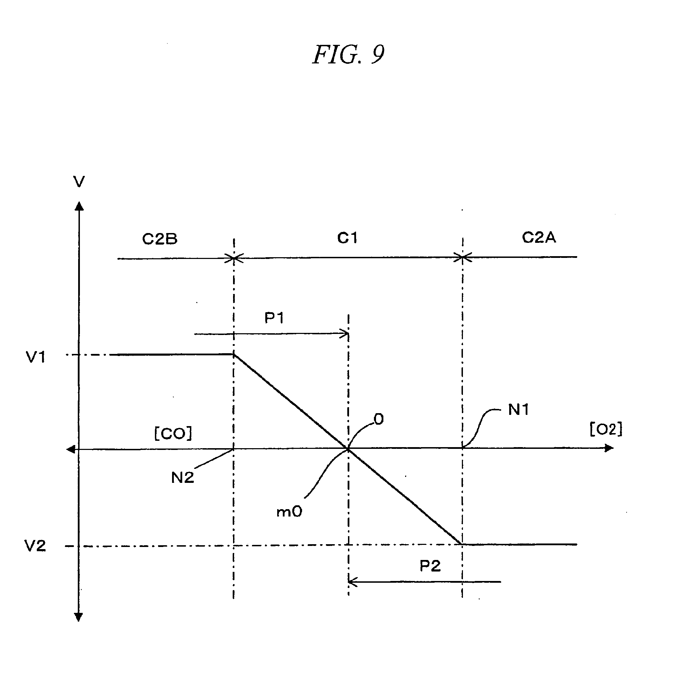

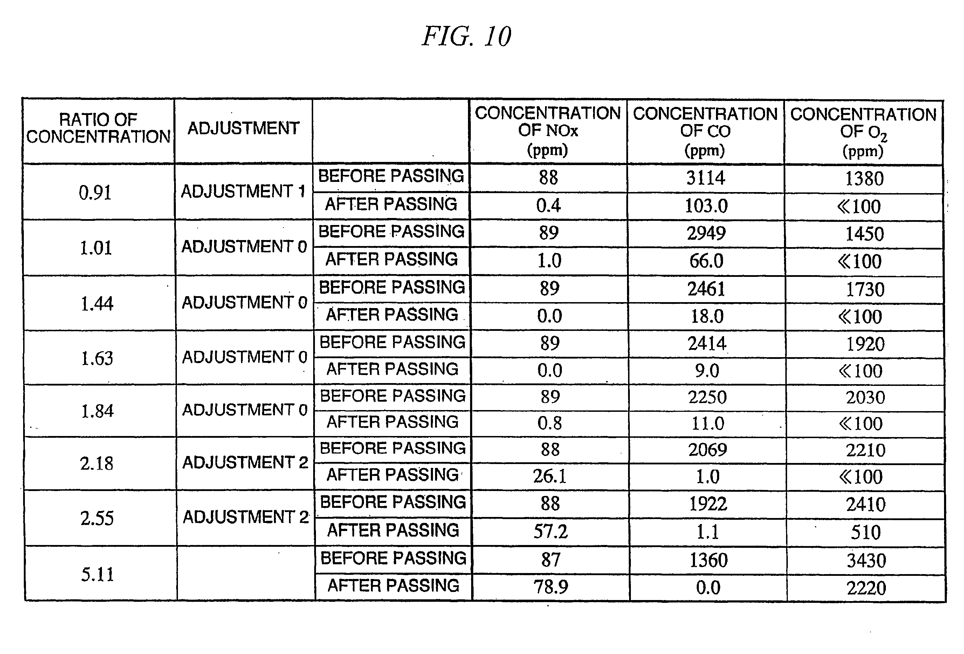

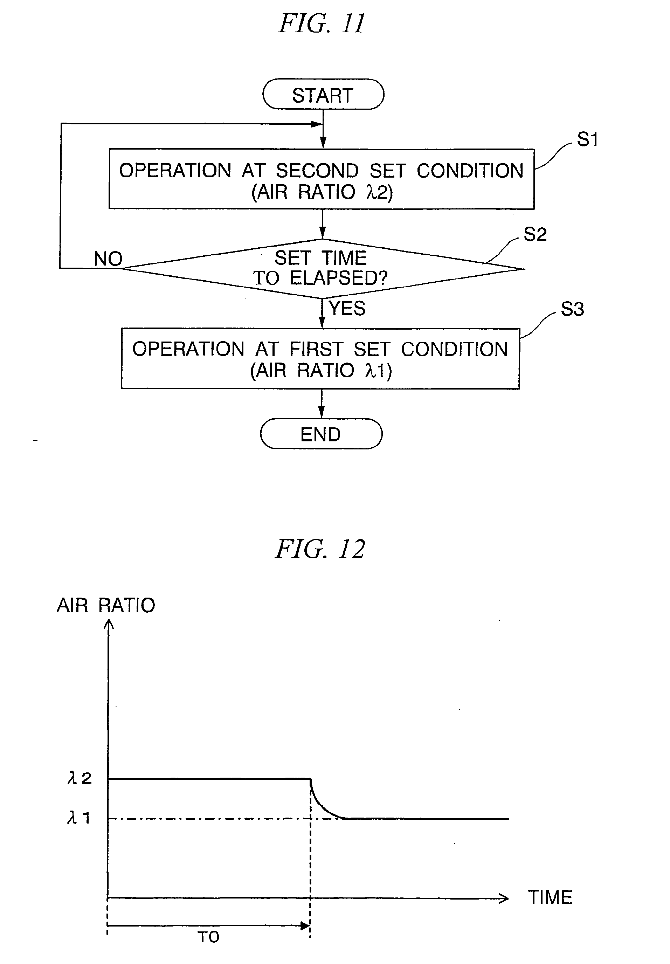

Next, Embodiment 1 in which the combustion apparatus of the present invention is applied to a steam boiler will be described with reference to the drawings. Embodiment 1 includes a program for performing the control at combustion initiation of suppressing the generation and/or emission of carbon monoxide during the combustion initiation of the burner. FIG. 1 is a longitudinal sectional view for explaining a steam boiler of Embodiment 1, FIG. 2 is a sectional view taken along line II to II in FIG. 1, FIG. 3 is a view showing a constitution of major parts when a catalyst given in FIG. 2 is viewed from a direction in which exhaust gas flows, FIG. 4 is a drawing showing the characteristics of air ratio-NOx/CO in Embodiment 1, FIG. 5 is a partial sectional view for explaining a damper position adjusting device of Embodiment 1, which is in operation, FIG. 6 is a sectional view for explaining major parts of the damper position adjusting device, FIG. 7 is a pattern diagram for explaining the characteristics of a burner and endothermic device and those of a catalyst given in Embodiment 1, FIG. 8 is a drawing for explaining the output characteristics of the sensor given in Embodiment 1, FIG. 9 is a drawing for explaining the motor controlling characteristics in Embodiment 1, FIG. 10 is a drawing for explaining the NOx and CO decreasing characteristics in Embodiment 1, FIG. 11 is a flow chart illustrating the control at combustion initiation in Embodiment 1, and FIG. 12 is a time chart illustrating the control at combustion initiation in Embodiment 1.

At first, an explanation will be made for the steam boiler of Embodiment 1. The steam boiler is provided with a burner 1, a storage water heater body 3 including a heat transfer tube (water tubes) group 2 as endothermic device for absorbing the heat of gas generated from the burner 1, a catalyst 4 through which gas containing oxygen, nitrogen oxides and carbon monoxide respectively at the predetermined concentration ratios after passing through the water tube group 2 passes in a contact state, thus oxidizing carbon monoxide and also reducing nitrogen oxides, fuel supply device 5 for supplying fuel gas to the burner 1, combustible air (air for combustion) supply device 6 for supplying combustible air to the burner 1 to premix fuel with the combustible air, a sensor 7 for detecting the concentration of oxygen downstream from the catalyst 4, and a controller 8 as a boiler controller for inputting signals such as those from the sensor 7 or others to control the fuel supply device 5, the combustible air supply device 6 and others, as major parts.

The burner 1 is a primary aerated-type premixed burner having a flat combustion face (face of ejecting premixed air). The burner 1 is similar in constitution to the burner described in Patent Document 1.

The storage water heater body 3 is provided with an upper header 9 and a lower header 10 to arrange a plurality of inner water tubes 11, 11 ... which constitute the water tube group 2 between the headers. Then, as shown in FIG. 2, a pair of water tube walls 14 and 14 constituted by connecting outer water tubes 12, 12 ... by using connection members 13, 13 ... are provided on both ends of the storage water heater body 3 in a longitudinal direction, thereby forming a first gas duct 15 through which gas from the burner 1 passes substantially linearly between these water tube walls 14 and 14, the upper header 9 and the lower header 10. The burner 1 is installed on one end of the first gas duct 15, and a second gas duct (smoke duct) 17 through which exhaust gas passes is connected to the other end thereof, which is an exhaust gas outlet 16. The burner 1 and the storage water heater body 3 used in Embodiment 1 are known.

The second gas duct 17 includes a horizontal part 18 and a perpendicular part 19, and the catalyst 4 is loaded at the horizontal part 18. A feed-water preheater 20, as an exhaust heat recovery system, is attached to the perpendicular part 19 so as to be positioned downstream from the catalyst 4, and the sensor 7 is arranged between the catalyst 4 and the feed-water preheater 20.

The burner 1 and constituents from the burner 1 including the water tube group 2 to the catalyst 4 (in particular, the burner 1 and the water tube group 2 are major parts) are provided with functions to adjust the concentration ratio K in gas on the primary side of the catalyst 4 to the predetermined concentration ratios K0 and K1. In other words, when adjustment is made to a set air ratio by air-ratio adjusting device 28 to be described later, there are provided the characteristics of air ratio-NOx/CO as shown in FIG. 4. The characteristics of air ratio-NOx/CO are characteristics of air ratio-NOx/CO on the primary side of the catalyst 4, in which the concentration of nitrogen oxides on the secondary side of the catalyst 4 is decreased to substantially zero when the air-ratio adjusting device 28 is controlled to adjust the air ratio to the set air ratio of 1.0 (hereinafter, referred to as primary characteristics). Then, the catalyst 4 has characteristics of air ratio-NOx/CO on the secondary side of the catalyst 4, which are obtained by allowing the gas having the primary characteristics to be in contact with the catalyst 4, (hereinafter, referred to as secondary characteristics). The primary characteristics are the concentration ratio characteristics of constituents from the burner 1 to the catalyst 4, whereas the secondary characteristics are characteristics of the catalyst 4. The primary characteristics are to decrease the concentration of NOx and that of carbon monoxide on the secondary side of the catalyst 4 to substantially zero when the set air ratio is adjusted to 1.0. In this instance, the predetermined reference concentration ratio K0 in gas on the primary side of the catalyst 4 is given as a specific reference concentration ratio K0X (refer to FIG. 7).

In FIG. 4, a first line (characteristic line) E indicates the concentration of CO on the primary side of the catalyst 4, and a second line F indicates the concentration of NOx on the primary side. Further, a third line J indicates the concentration of CO on the secondary side of the catalyst 4, having such characteristics that the concentration of CO is decreased to substantially zero at an air ratio of 1.0 or higher and the concentration is abruptly increased as the air ratio is lower than 1.0. Still further, a fourth line U indicates the concentration of NOx on the secondary side of the catalyst 4, having such characteristics that the concentration of NOx is decreased to substantially zero in a predetermined region having the air ratio of 1.0 or lower, and the concentration is increased from substantially zero when the air ratio is in excess of 1.0 and soon equal to the concentration on the primary side of the catalyst 4. A region equal to or lower than an air ratio at which the concentration of NOx on the secondary side of the catalyst 4 is equal to the concentration on the primary side is referred to as a NOx/CO decreasing region. A lower limit of the NOx/CO decreasing region can be given as an air ratio at which the concentration of CO on the secondary side of the catalyst 4 is 300 ppm (CO exhaust standards in Japan). Characteristics of air ratio-NOx/CO of the low air ratio region are new characteristics, which have not yet been subjected to research. In this case, the low air ratio refers to an air ratio of 1.1 or lower and preferably 1.05 or lower, and a region having the low air ratio is referred to as the low air ratio region.

The catalyst 4 is provided with functions of oxidizing carbon monoxide contained in the gas free of hydrocarbons after passing through the water tube group 2 (first reaction) and also reducing nitrogen oxides (second reaction). In Embodiment 1, used is a catalyst in which a catalyst activating substance is platinum. As already having been explained in the section of "Best Mode for carrying out the Invention, " when theoretical consideration is given on the basis of experimental results, there may be a first reaction in which the gas satisfying formula (3) of the concentration ratio is in contact with the catalyst activating substance of the catalyst 4 to oxidize mainly carbon monoxide and a second reaction in which nitrogen oxides are reduced by carbon monoxide. Whether the first reaction proceeds or not will be determined, depending on the concentration of oxygen. In the catalyst 4, it is considered that the first reaction is predominant over the second reaction.

The catalyst 4 will be more specifically explained by referring to a catalyst constituted in FIG. 3 and formed in such procedures that many fine irregularities are formed on the respective surfaces of a flat plate 21 and a corrugated plate 22, both of which are made of stainless steel, as the matrix, thereby holding a catalyst activating substance (not illustrated) on the surfaces. Then, the flat plate 21 having a predetermined width is placed on the corrugated plate 22, which are then wound helically and formed into a roll shape. A side plate 23 is used to enclose and fix the thus roll-shaped substance. Platinum is used as the catalyst activating substance. In addition, FIG. 3 shows the flat plate 21 and the corrugated plate 22 only partially.

The catalyst 4 is active in oxidation in a low temperature region and arranged at the horizontal part 18, which is on its way to the second gas duct 17, that is, at a position where exhaust gas is approximately in a range of 100°C to 350°C. Then, the catalyst 4 is removably attached to the second gas duct 17 so as to be exchanged when deteriorated in performance.

The fuel supply device 5 is constituted so as to include a fuel gas supply tube 24 and a flow rate adjusting valve 25 installed on the fuel gas supply tube 24 to adjust a fuel flow rate. The flow rate adjusting valve 25 is provided with functions of controlling fuel supply at a high combustion flow rate and a low combustion flow rate.

The combustible air supply device 6 is constituted so as to include a blower 26, an air supply duct 27 for supplying combustible air from the blower 26 to the burner 1 and air-ratio adjusting device 28 for adjusting an air ratio of the burner 1 by adjusting the amount of combustible air flowing through the air supply duct 27. The fuel gas supply tube 24 is connected inside the air supply duct 27 so as to eject fuel gas.

The air-ratio adjusting device 28 is constituted so as to include a damper 29 as flow rate adjusting device for adjusting an aperture (cross-sectional area of the flow channel) of the air supply duct 27, a damper position adjusting device 30 for adjusting an aperture position of the damper 29 and the controller 8 for controlling the operation of the damper position adjusting device 30.

The damper position adjusting device 30 is, as shown in FIG. 5, provided with a driving shaft 32 removably connected to a rotating shaft 31 of the damper 29. The driving shaft 32 can be rotated by a motor 34 via a reduction gear 33. The motor 34 includes any motor freely adjustable for rotation position and stop position. In the present embodiment, a stepping motor (pulse motor) is used.

The driving shaft 32 is connected to the rotating shaft 31 of the damper 29 via a coupling 35, by which it can be rotated substantially coaxially in an integral manner. The coupling 35 is formed in a stepped cylindrical shape, the central part of which is provided with a minor diameter hole 36 and a major diameter hole 37, which have penetrated axially. The driving shaft 32 is inserted into the minor diameter hole 36, and the driving shaft 32 is integrally fixed to the coupling 35 by a fitting screw 38. On the other hand, the rotating shaft 31 of the damper 29 can be inserted into the major diameter hole 37, and the rotating shaft 31 can be integrally rotated by a key 39 together with the coupling 35. Therefore, key grooves 40 and 41 are formed respectively on the rotating shaft 31 and the major diameter hole 37 of the coupling 35.

The above-mentioned coupling 35 is retained in an external case 43 of the damper position adjusting device 30 so as to rotate freely in a state that the driving shaft 32 is inserted into one end thereof, with the other end inserted via a bearing 42. The external case 43 is constituted in such a manner that the reduction gear 33 and the motor 34 are retained on one end thereof and the coupling 35 and abnormal rotation detecting device 44 are contained therein hermetically on the other end thereof in a state that the key groove 41-equipped major diameter hole 37 of the coupling 35 is exposed.

The abnormal rotation detecting device 44 is provided with a plate to be detected 45 and a detector 46. The plate to be detected 45 is extended radially outwardly and fixed to a stepped portion at the center of the coupling 35 in an axial direction. The plate to be detected 45 is installed so as to be coaxial with the coupling 35 and the driving shaft 32. A slit forming region 48 having many slits 47, 47 ... equally spaced in a peripheral direction is installed partially at an outer periphery of the plate to be detected 45. In the present embodiment, the slit forming region 48 is installed only in a quarter of a circular arc (90 degrees). Each of the slits 47 formed at the slit forming region 48 is identical in shape and size. In the present embodiment, narrow and long rectangular grooves along the plate to be detected 45 in the radial direction are punched peripherally at equal intervals.

The detector 46 for detecting the slit 47 is fixed to the external case 43. The detector 46 is composed of a transmission-type photo interrupter and installed in such a manner that an outer periphery of the plate to be detected 45 is placed between a light emitting device 49 and a light receiving device 50. The plate to be detected 45 is placed between the light emitting device 49 and the light receiving device 50 of the detector 46, thereby the presence or absence of receipt of light from the light emitting device 49 by the light receiving device 50 is switched by whether or not the slit 47 on the plate to be detected 45 is arranged at a position corresponding to the detector 46 (position corresponding to a light path from the light emitting device 49 to the light receiving device 50). Thereby, it is possible to detect an aperture position of the damper 29.

The damper position adjusting device 30 is positioned so that the damper 29 keeps the air supply duct 27 fully opened in a state that a slit 51 at the clockwise end of the slit forming region 48 shown in FIG. 6 is arranged at a position corresponding to the detector 46 and attached to the rotating shaft 31 of the damper 29.

Then, since the slit forming region 48 is formed only at a portion corresponding to a quarter of the plate to be detected 45, in a state that the slit 51 at the clockwise end of the slit forming region 48 is arranged at a position corresponding to the detector 46, as described above, the damper 29 keeps the air supply duct 27 fully closed. On the other hand, in a state that a slit 52 at the counter-clockwise end of the slit forming region 48 is arranged at a position corresponding to the detector 46, the damper 29 keeps the air supply duct 27 fully opened.

In a state that the motor 34 and the detector 46 are connected to the controller 8, the damper position adjusting device 30 is able to control the rotation of the motor 34, while monitoring an abnormal rotation of the damper 29. More specifically, in order to control the motor 34, the damper position adjusting device 30 is provided with a circuit for preparing control signals including driving pulse to the motor 34 and able to output the thus prepared control signal to the motor 34. Thereby, the motor 34 is arbitrarily controlled for the rotation angle, depending on normal rotation or reverse rotation and driving amount, that is, the number of driving pulses. Further, the driving pulse is changed in interval (feeding velocity), thereby making it possible to control the rotation speed.

In controlling an actual opening and closing of the damper 29, the controller 8 at first operates to detect an original point so that a fully closed position of the damper 29 can be given as the original point. First, in FIG. 6, the plate to be detected 45 is rotated in a counter-clockwise direction. On the assumption that the detector 46 is at present arranged inside the slit forming region 48 of the plate to be detected 45, the detector 46 detects the slit 47 regularly in accordance with the rotation of the plate to be detected 45. Therefore, the detected pulse is output to the controller 8 as a detection signal. Then, the plate to be detected 45 is rotated until the detector 46 is arranged outside the slit forming region 48, thereby no pulse is detected. If no pulse is detected within a predetermined time, the controller 8 recognizes that the detector 46 is outside the slit forming region 48, switching the rotating direction to a reverse direction. In other words, in the present embodiment, the original point is defined as a position at which the plate to be detected 45 is rotated reversely in a clockwise direction to detect the first pulse (slit 51 at the clockwise end) . Confirmation of the original point by the clockwise rotation is made at a lower speed than the counter-clockwise rotation before the rotating direction is switched.

Since the thus detected original point corresponds to a fully closed position of the damper 29, the controller 8 outputs a driving signal to the motor 34 on the basis of this state, thus making it possible to control the opening and closing of the damper 29. If the controller 8 drives the motor 34 to open or close the damper 29, a detection signal of the slit 47 is obtained as a pulse from the detector 46 accordingly. Therefore, the controller 8 is able to monitor an abnormal rotation of the damper 29 by comparing a detection signal from the detector 46 with a control signal to the motor 34. More specifically, a control signal composed of driving pulse to the motor 34 is compared with a detection signal composed of detection pulse of the slit 47 by the detector 46, thereby monitoring the presence or absence of abnormal rotation.

For example, where no detection pulse is detected from the detector 46 despite the fact that a driving pulse has been sent to the motor 34, the controller 8 determines it to be an abnormal rotation. In this instance, the detection pulse from the detector 46 is usually different in frequency from driving pulse to the motor 34. Therefore, control is obtained, with the difference taken into account. For example, such control is obtained that the abnormal rotation is determined only in a case where no pulse of detection signal is detected at all even after the elapse of a predetermined pulse of a driving signal. The controller 8 performs a notification operation of the abnormal rotation and halts the combustion upon determination of the abnormal rotation. In contrast, the abnormal rotation can also be detected in a case where any pulse is detected by the detector 46, despite the fact that no driving pulse has been sent to the motor 34.

The controller 8 controls the motor 34 with a previously stored air ratio control program. The air ratio control program is configured so as to contain a basic control program (first program) of controlling the concentration ratio so as to decrease the concentration of nitrogen oxides on a secondary side of the catalyst 4 to substantially zero, a control program at combustion initiation (second program) of controlling the motor so as to prevent the emission of a great amount carbon monoxide at combustion initiation of the burner 1, a control program at a time of change in a combustion amount (third program) of controlling the motor so as to prevent the emission of a great amount of carbon monoxide when the combustion of the burner 1 is switched from low combustion to high combustion or from high combustion to low combustion, and a control program at a time of abnormality (fourth program) of preventing the emission of a great amount of carbon monoxide at a time of decrease in a function of the catalyst 4 and at a time of abnormality of the sensor 7. The second program and the third program are configured so as to contain the first program. The third program is similar to that in Embodiment 3 described later, so the description will be omitted in Embodiment 1. Further, the fourth program is not directly related to the present invention, so the description is omitted.

First, an explanation will be made for the basic control program. The controller 8 controls the motor 34 based on signals detected by the sensor 7 in such a manner that an air ratio of the burner 1 will be a first set air ratio $\lambda 1$ (=1.0) (first control condition) and also a concentration ratio of the gas on the primary side (before flow) of the catalyst 4 satisfies the following formula (3) at this first set air ratio $\lambda 1$ (second control condition).

$$([NOx] + 2[O_2])/[CO] \leq 2.0 \cdots (3)$$

(In formula (3), [CO], [NOx] and [O$_2$] denote the respective concentrations of carbon monoxide, nitrogen oxides and oxygen, and satisfying the condition of [O$_2$] > 0.)

In Embodiment 1, it is the first control condition that gives a direct control. Therefore, the first control condition is satisfied, by which the second control condition is automatically satisfied. This will be explained hereinafter by referring to FIG. 4 and FIG. 7.

The characteristics of air ratio-NOx/CO given in FIG. 4 are expressed based on the primary characteristics of constituents including the burner 1 and the water tube group 2 as well as the secondary characteristics of the catalyst 4. In FIG. 7, they are expressed based on the primary characteristics of the constituents with respect to the concentration of oxygen on the primary side of the catalyst 4 and the characteristics of the catalyst 4.

As shown in FIG. 7, the characteristics of the catalyst 4 are expressed by a fifth line L ([NOx] on the secondary side = 0, [CO] = 0 line) related to the predetermined reference concentration ratio K0 on the primary side of the catalyst 4. The fifth line L is a line in which the concentration of nitrogen oxides and that of carbon monoxide on the secondary side of the catalyst 4 are decreased to substantially zero when the concentration ratio K on the primary side of the catalyst 4 is positioned (placed) on the line, specifically, a line, which satisfies the predetermined reference concentration ratio K0. The fifth line L corresponds to a case where the predetermined concentration ratio of formula (3) is 1. In other words, the fifth line L is a line satisfying the following formula (3A).

$$[NOx] + 2[O_2] = [CO] \cdots (3A)$$

In this instance, as shown in FIG. 10, [NOx] is approximately from 1/30 to 1/50 of [CO] in concentration. Thus, in FIG. 7, NOx concentration characteristics with respect to the concentration of oxygen are omitted, and [NOx] of formula (3A) can be negligible. Where the concentration of oxygen on the primary side is X1 on the fifth line L, the concentration of carbon monoxide on the primary side Y1 will be Y1 = 2X1 + [NOx]. In addition, since confirmation has been made for the predetermined reference concentration ratio K0, which decreases the concentration of nitrogen oxides and that of carbon monoxide on the secondary side of the catalyst 4 to substantially zero in a range of the concentration ratio K exceeding 1.0 up to 2.0, the fifth line L is not limited to the line L shown in the drawing but may include any line satisfying formula (3).

Then, a predetermined reference concentration ratio K0 of oxygen, nitrogen oxides and carbon monoxide at a point at which a sixth line M indicating the primary characteristic curve of the burner 1 and the water tube group 2 intersects with the fifth line L is the specific reference concentration ratio K0X. Where the concentration ratio K on the primary side is given as the specific reference concentration ratio K0X, the catalyst 4 has such characteristics that the concentration of nitrogen oxides and that of carbon monoxide on the secondary side of the catalyst 4 are decreased to substantially zero. The adjustment to the reference concentration ratio K0X corresponds to Adjustment 0 of the present invention.

Then, the catalyst 4 has such characteristics that when the concentration of oxygen on the primary side is made higher than a reference oxygen concentration SK corresponding to the specific reference concentration ratio K0X, oxygen is detected on the secondary side of the catalyst 4 in a concentration depending on a difference between the concentration of oxygen on the primary side and the reference oxygen concentration, the concentration of carbon monoxide on the secondary side of the catalyst 4 is decreased to substantially zero, and the concentration of nitrogen oxides on the secondary side of the catalyst 4 is decreased to a greater extent than the concentration of nitrogen oxides on the primary side by reduction reaction. A region characterized in that oxygen is detected on the secondary side of the catalyst 4 and the concentration of nitrogen oxides on the secondary side is decreased to a greater extent than the concentration of nitrogen oxides on the primary side is referred to as a secondary NOx leakage region R1. The secondary NOx leakage region R1 is a region, which realizes Adjustment 2 of the present invention, and an air ratio of the burner 1 is in excess of 1.0.

The catalyst 4 also has such characteristics that when the concentration of oxygen on the primary side is lower than the reference oxygen concentration SK, carbon monoxide is detected on the secondary side of the catalyst 4 in a concentration depending on a difference between the concentration of oxygen on the primary side and the reference oxygen concentration SK, and the concentration of nitrogen oxides on the secondary side of the catalyst 4 is decreased to substantially zero in a predetermined range. A region characterized in that carbon monoxide is detected on the secondary side of the catalyst 4 and the concentration of nitrogen oxides is decreased to substantially zero is referred to as a secondary CO leakage region R2. The secondary CO leakage region R2 is a region, which realizes Adjustment 1 of the present invention, and an air ratio of the burner 1 is less than 1.0. The air ratio of the burner 1 is set in a range free of hydrocarbons but containing oxygen on the primary side of the catalyst 4, where it is set to less than 1.0. A region, which combines the secondary NOx leakage region R1 with the secondary CO leakage region R2, is referred to as a NOx/CO decreasing region R3.

The above-mentioned characteristics of the catalyst 4 shown in FIG. 7 are in agreement with the characteristics of air ratio-NOx/CO shown in FIG. 4. As apparent from FIG. 7, when the concentration of oxygen and/or that of the carbon monoxide on the secondary side of the catalyst 4 are detected and the air-ratio adjusting device 28 is controlled in such a manner that the concentration of oxygen and/or that of carbon monoxide are decreased to zero, the concentration ratio K on the primary side of the catalyst 4 is controlled to the specific reference concentration ratio K0X, and the concentration of nitrogen oxides and that of carbon monoxide on the secondary side of the catalyst 4 can be decreased to substantially zero. Thus, the first control condition is satisfied, by which the second control condition is also to be satisfied.

Failure to satisfy the first control condition would result in the generation of unburned combustibles such as hydrocarbons. In this case, energy loss would be caused, and the catalyst 4 would be unable to attain an effective decrease in NOx.

The second control condition is necessary in decreasing the concentration of emitted nitrogen oxides to substantially zero. It has been found by experiments and theoretical consideration that in order to decrease the concentration of nitrogen oxides and that of carbon monoxide on the secondary side of the catalyst 4 to substantially zero, a concentration ratio K, which gives $([NOx] + 2[O_2])/[CO]$ may be approximately 1.0 by referring to the first reaction and the second reaction. It has been, however, confirmed that the concentration of emitted nitrogen oxides can be decreased to substantially zero even at the concentration ratio K of 1.0 to 2.0.

Used as the sensor 7 is a zirconia type air-fuel ratio sensor which has a resolution of emitted oxygen concentration of 50 ppm and which is excellent in responsiveness, that is, having a response time of 2 sec or less. As shown in FIG. 8, output characteristics of the sensor 7 are those in which an output is given as an output related to the concentration of oxygen on the positive side and as an output related to the concentration of carbon monoxide or others on the negative side. In other words, an air ratio m is calculated by referring to the concentration of oxygen to be determined (oxygen excess region) and the concentration of carbon monoxide or the like (fuel excess region), thus obtaining an output of electric current or voltage corresponding to the air ratio m.

Then, the air ratio control program gives control on the basis of signals output by the sensor 7 in such a manner that an air ratio of the burner 1 will be the set air ratio. More specifically, the program is constituted as follows. As shown in FIG. 9, the program includes such control procedures that a first control zone C1 at which a feeding velocity V of the motor 34 (driving amount per unit time) is changed depending on a difference between an output value from the sensor 7 and a set value corresponding to the set air ratio, and second control zones C2A and C2B at which the feeding velocity V is divided into a first set value V2 and a second set value V1 outside the first control zone C1 are provided to control a driving amount of the motor 34. In FIG. 9, P1 indicates a damper opened region, and P2 indicates a damper closed region.

The set range of the first control band C1 is set by a set oxygen concentration N1 (for example, 100 ppm) and a set carbon monoxide concentration and the like N2 (for example, 50 ppm), and the first control band C1 is controlled so as to fall in the set range defined by the set oxygen concentration N1 and the set carbon monoxide concentration and the like N2 so as to set the air ratio to be a set air ratio of substantially 1.0.

A feeding velocity V in the first control zone C1 can be calculated by the following formula (4). The feeding velocity V is a driving amount per unit time. A rotating angle in 1 step of the motor 34 of Embodiment 1 is 0.075 degrees, which corresponds to change in approximately 30 ppm in terms of $O_2$.

Next, the control program at combustion initiation, which is a feature of the present invention, will be described with reference to FIGS. 11 and 12. The control program at combustion initiation is configured so as to be performed after the completion of prepurge and firing, and to be able to execute the first set condition of inputting a detected value of the sensor 7, controlling the driving amount of the motor 34, and controlling an air ratio to be the first set air ratio λ1 (m0 in FIG. 9), and the second set condition of controlling to a second set air ratio λ2 (for example, 1.25). The first set air ratio λ1 is set to be 1.0 so that the concentration of carbon monoxide on a primary side of the catalyst 4 becomes the first set value (for example, 2,000 ppm to 3,000 ppm) based on the experimental results. Further, the second set air ratio λ2 also is previously set so that the concentration of carbon monoxide in gas on the primary side of the catalyst 4 becomes the second set value equal to or lower than the CO reference emission value.

Referring to FIG. 11, at combustion initiation of the burner 1, first, combustion is started at the second set air ratio λ2, and a preheating control of preheating the catalyst 4 is performed by the combustion (S1). The preheating control is configured so as to be performed for a set time T0. When the set time T0 elapses, combustion is performed at the first set air ratio λ1 (S3).

Next, an explanation will be given for motions of the thus constituted steam boiler. First, motions of the steam boiler will be described schematically. Combustible air (ambient air) supplied from the blower 26 is premixed with fuel gas supplied from the fuel gas supply tube 24 inside the air supply duct 27. The thus premixed air is ejected from the burner 1 to the first gas duct 15 inside the storage water heater body 3. The premixed air is ignited by ignition device (not illustrated) to burn. This burning is conducted at a low air ratio as described above.

The gas generated in accordance with this burning is in contact with an upstream water tube group 2 and cooled. Thereafter, it is treated endothermically through heat exchange with a downstream water tube group 2 to yield gas at approximately 100°C to 350°C. The gas free of hydrocarbons but containing oxygen, nitrogen oxides and carbon monoxide is subjected to an oxidation and reduction treatment by the catalyst 4, and emitted as exhaust gas into the atmosphere from the second gas duct 17 after the concentration of nitrogen oxides is decreased to substantially zero, and that of carbon monoxide is decreased to a concentration equal to or lower than the reference emission value.

(Operation by the basic control program)

Next, an explanation will be made for an air ratio controlled by the air-ratio adjusting device 28. The boiler used in Embodiment 1 is operated by switching high combustion to low combustion. Therefore, the damper 29 is positioned by selecting a high combustion airflow position or a low combustion airflow position.

The damper 29 is adjusted for position by the damper position adjusting device 30 on the basis of instructions from the controller 8. In other words, the controller 8 inputs a signal for selecting the high combustion or the low combustion and an output value corresponding to an air ratio detected by the sensor 7 to output a signal for driving the motor, thereby adjusting an aperture position of the damper 29. An aperture position set for the damper 29, which is used as a set value corresponding to each first set air ratio λ1 on high combustion or low combustion, is stored at the controller 8 as an initial value for each pulse number from an original point.

First, an explanation will be given for control on high combustion. The controller 8 determines whether the present aperture position of the damper 29 is on the opening side with respect to the set aperture position (the side to be controlled in a closing direction) or on the closing side (the side to be controlled in an opening direction) and also calculates the driving pulse number of the motor 34. It also determines whether the output value belongs to the first control zone C1 or the second control zones C2A and C2B in FIG. 9.

Where the output value belongs to the second control zone C2A, the motor 34 is driven at the first set feeding velocity V2 and also at a calculated driving pulse to close the damper 29 at a high velocity. Where it belongs to the second control zone C2B, the motor 34 is driven at the second set feeding velocity V1 and also at a calculated driving pulse to open the damper 29 at a high velocity. Therefore, where the output value is relatively distant from a set value corresponding to the set air ratio, an output value corresponding to an air ratio detected at a high velocity is controlled so as to come closer to a set value corresponding to the first set air ratio λ1, thus making it possible to give air ratio control excellent in responsiveness.

Further, where the output value belongs to the first control zone C1, a feeding velocity of the motor 34 is calculated based on formula (4) after determination of a rotational direction, and the motor 34 is driven based on the thus calculated feeding velocity and the calculated driving pulse. The control at the first control zone C1 is made at a higher feeding velocity as the output value is further distant from a set value corresponding to the set air ratio. Owing to the above-mentioned control, it is possible to smoothly bring the value closer to a set value corresponding to a target first set air ratio λ1. Further, a stepping motor capable of securing the control of a rotational position is used and a feeding velocity is controlled so as to slow down as an output value corresponding to the detected air ratio comes closer to a set value corresponding to the first set air ratio λ1, thus making it possible to prevent overshooting and hunting of the air ratio in the vicinity of a set value corresponding to the first set air ratio λ1.

The air ratio is controlled as described above, by which an air ratio on the primary side of the burner 1 will be a low air ratio close to 1.0 and the concentration ratio of gas on the primary side of the catalyst 4 is controlled so as to change to a lesser extent, thus stably satisfying formula (3). As a result, the concentration of nitrogen oxides on the secondary side of the catalyst 4 can be decreased to substantially zero and that of carbon monoxide can also be decreased to a value in a range of practical values.

(Experiment 1)

An explanation will be given for the result of an experiment conducted under the following conditions: a storage water heater body 3 having a capacity of evaporation per unit time of 800 kg (storage water heater body with the production type of SQ-800 manufactured by the applicant) was assembled into a premixed burner 1 to effect combustion at 45.2 $m^3N/h$; and a catalyst 4 with a volume of 10 L and an inner diameter of 360 mm was prepared in which Pt was held at a proportion of 2.0 g/L. Where the set air ratio was given as 1. 0, the concentration of carbon monoxide, that of nitrogen oxides and that of oxygen on the primary side of the catalyst 1 (before passage through the catalyst 4) were adjusted respectively to 2,295 ppm, 94 ppm and 1,655 ppm in terms of an average value for 10 minutes, and those on the secondary side of the catalyst 1 (after passage through the catalyst 1) were adjusted respectively to less than 13 ppm, 0.3 ppm and 100 ppm in terms of an average value for 10 minutes. In this instance, the concentration of oxygen on the secondary side of the catalyst 1, 100 ppm, was a detection limit of oxygen concentration. Further, temperatures of gas before and after the catalyst 4 were respectively approximately 302°C and 327°C. In Experiment 1 as well as Experiments 2 and 3 as described below, the catalyst 4 was arranged slightly upstream from the feed-water preheater 20, and measurement instruments were placed before and after the catalyst 4. The respective concentrations of gas after passage through the catalyst 4 were measured by using an instrument (PG-250) manufactured by Horiba Ltd., and the respective concentrations before passage through the catalyst 4 were measured by using an instrument (COPA-2000) manufactured by Horiba Ltd. As a matter of course, hardly any change may be found in the measurement concentration where the catalyst 4 is arranged in the position shown in FIG. 1.

(Experiment 2)

FIG. 10 shows values at each concentration ratio at the concentration of carbon monoxide, that of nitrogen oxides and that of oxygen obtained in a case where the same burner 1 and the storage water heater body 3 as those of Experiment 1 were used to effect combustion at the same rate and set air ratio as that of Experiment 1, and a catalyst 4 with a volume of 10 L and an inner diameter of 360 mm was prepared in which Pd was held as a catalyst activating substance at 2.0g/L. In this instance, the concentration of oxygen after passage through the catalyst was measured by the same oxygen concentration sensor as that used in Experiment 1 and indicated as 100 ppm, even when the concentration was actually 100 ppm or less. Temperatures of gas before and after the catalyst 4 were in the respective ranges of approximately 323°C to 325°C and approximately 344°C to 346°C.

According to Embodiment 1, damper position adjusting device 30 for adjusting the ratio of combustible air to fuel can be used to control the concentration ratio K of oxygen, nitrogen oxides and carbon monoxide on the primary side of the catalyst 4 to the specific reference concentration ratio K0X (Adjustment 0) and also decrease the concentration of emitted NOx and that of emitted CO to substantially zero. Therefore, as compared with technologies for decreasing NOx by addition of water/steam and those for decreasing NOx by use of a denitration agent, the present invention is able to decrease NOx and CO in a simple constitution in which air-ratio adjusting device and a catalyst are used.

Further, since the air ratio is set to substantially 1.0, an energy-saving operation can be performed. Incidentally, an ordinary boiler operated at an oxygen concentration of 4% (air ratio of approximately 1.235) is compared with that operated at an oxygen concentration of 0% (air ratio of approximately 1.0) to find that the boiler efficiency is increased approximately by 1 to 2%. Nowadays, when measures are required for combating global warming, an increase in boiler efficiency can make a great contribution to industries.

Still further, the sensor 7 is installed on the secondary side of the catalyst 4 to control an air ratio, thus making it possible to obtain a stable control, as compared with a case where the sensor is installed on the primary side of the catalyst 4 to control the air ratio. The air ratio is also controlled at a resolution of oxygen concentration of 100 ppm or lower, thus making it possible to obtain air ratio control responsively and stably.

(Operation by the control program at combustion initiation)

Next, an operation at combustion initiation of the burner 1 will be described with reference to FIGS. 11 and 12. The controller 8 performs well-known prepurge and firing, and then, conducts low combustion for a short period of time to shift to high combustion. The basic air ratio control is as described above. After the completion of firing, the controller 8 allows the burner 1 to conduct combustion (including the low combustion and the high combustion) at the second set air ratio λ2 in the processing step S1 (hereinafter, the processing step SN will be referred to simply as SN) in FIG. 11.

Due to the combustion at the second set air ratio λ2, the catalyst 4 is preheated. During the preheating , the concentration of carbon monoxide on the primary side of the catalyst 4 is, for example, 50 ppm or less, and the concentration of carbon monoxide after the passage through the catalyst 4 is equal to or lower than the reference emission value even if the catalyst 4 does not function at all.

Then, in S2, it is determined whether or not the set time T0 (for example, 1 to 2 minutes) has elapsed. Here, if YES is determined, the process proceeds to S3, and the burner 1 conducts combustion at the first set air ratio $\lambda 1$. Due to the combustion control, as described above, an energy-saving operation at a low air ratio, in which emitted nitrogen oxides is decreased to substantially zero, is performed.

The effect by the control at combustion initiation in Embodiment 1 is as follows. At combustion initiation of the burner 1, during a period from the initiation of an operation in which the temperature of the catalyst 4 is low to the activation temperature of the catalyst 4, the catalyst 4 does not exhibit an intended oxidation function. This is ascribed to the low temperature of the catalyst 4. The temperature of the catalyst 4 is low at a time of cold activation (at combustion initiation in which the temperature of the catalyst 4 is equal to or lower than the activation temperature). Therefore, when combustion is started at the first set air ratio $\lambda 1$ of the burner 1, carbon monoxide is emitted to the atmosphere in an amount exceeding the reference emission value.

However, according to Embodiment 1, combustion at the second set air ratio $\lambda 2$ in which the generation amount of carbon monoxide is small is conducted only for a set time T0, whereby a great amount of carbon monoxide is prevented from being emitted at combustion initiation.

[Embodiment 2]

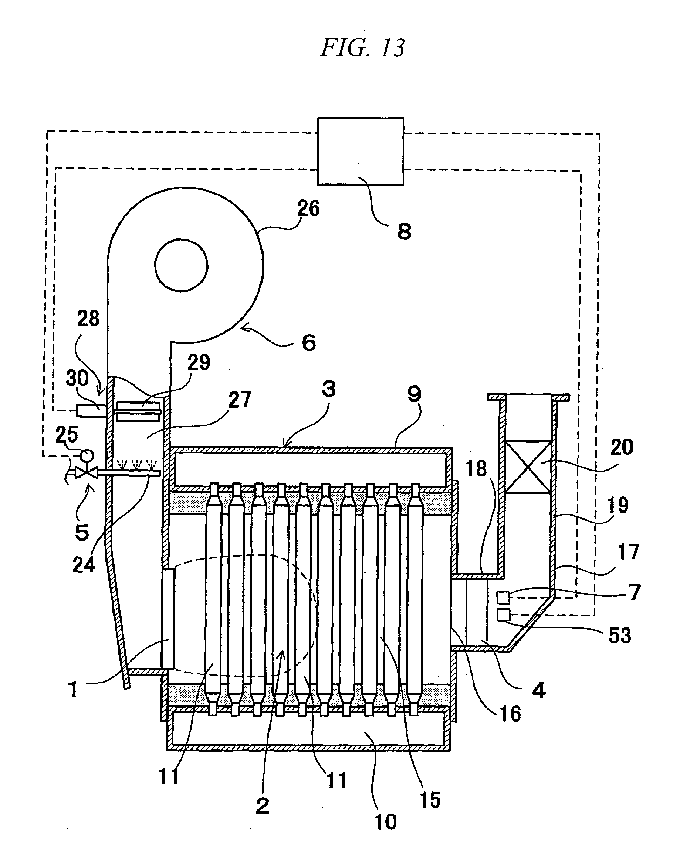

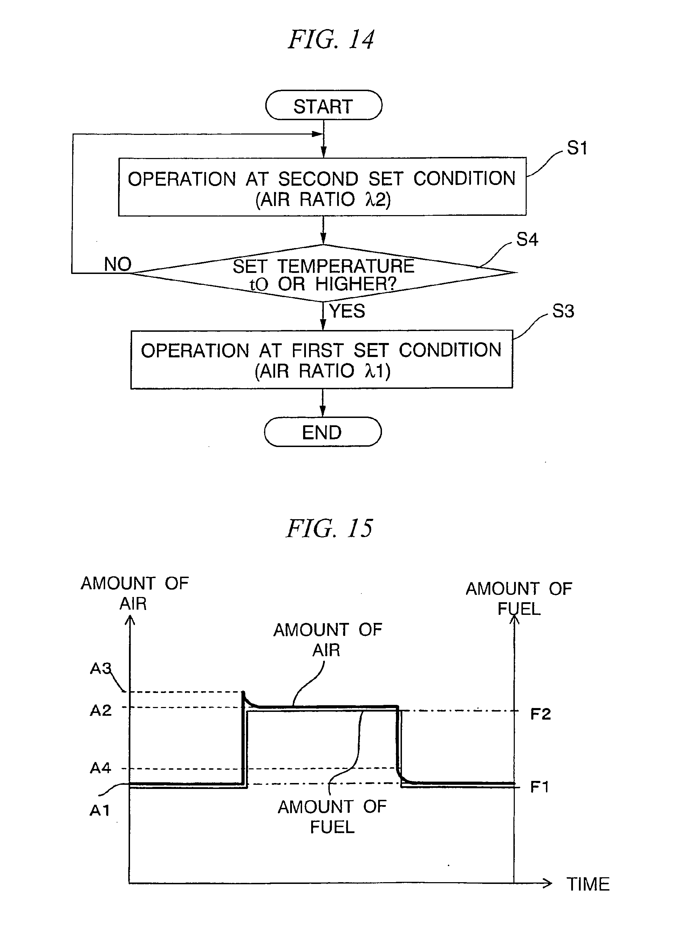

Embodiment 2 of the present invention will be described with reference to FIGS. 13 and 14. Embodiment 1 is configured so that the catalyst 4 is preheated for the set time with a timer at the second set air ratio $\lambda 2$. However, in Embodiment 2, a temperature sensor (second sensor) 53 for detecting the temperature on an output side of the catalyst 4 is provided, and the detection of a temperature is performed until the detected temperature of the temperature sensor 53 becomes a set temperature t0. The control by the temperature sensor 53 is performed in the control procedure shown in FIG. 14. In FIG. 14, the control procedure is different from that in FIG. 11 only in S4, and S1 and S3 are the same as those in FIG. 11. The basic operation in Embodiment 2 is the same as that in Embodiment 1 except that the combustion at the second set air ratio $\lambda 2$ is controlled with a temperature instead of a time, so the description will be omitted. According to Embodiment 2, the effect capable of preheating the catalyst 4 more exactly compared with Embodiment 1 is exhibited. In Embodiment 2, although the temperature sensor 53 is provided on an output side (secondary side) of the catalyst 4, the temperature sensor 53 may be provided on an input side (primary side) to perform the same temperature control.

[Embodiment 3]

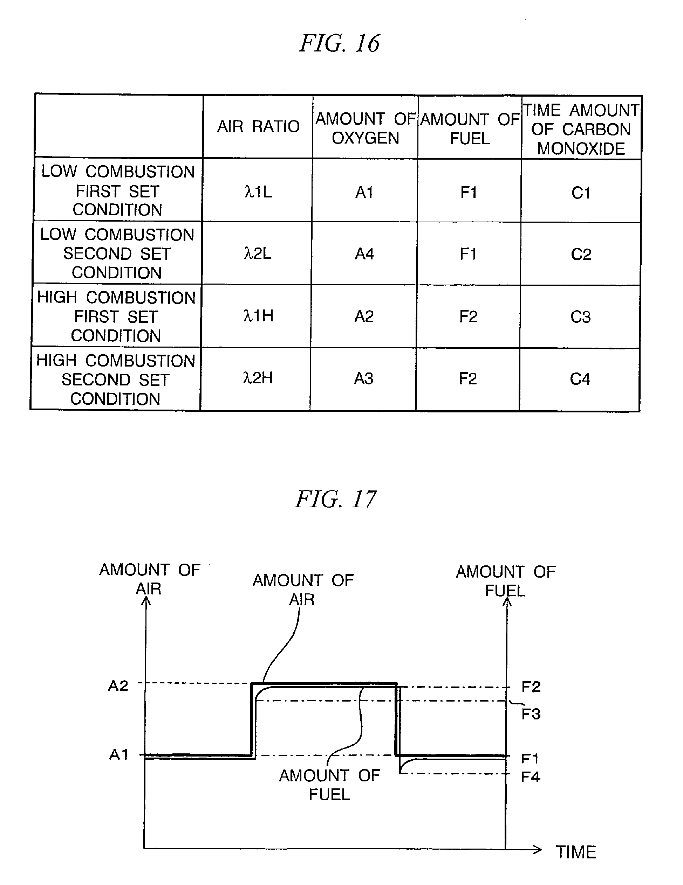

Next, Embodiment 3 of the present invention will be described with reference to FIGS. 15 and 16. Embodiment 3 is an embodiment having a program in which the control at a time of change in a combustion amount of suppressing the generation of carbon monoxide is performed at a time of change in a combustion of changing the first combustion amount to the second combustion amount or vice versa. Embodiment 3 has a hard configuration similar to that in Embodiment 1, so the descriptions of the common portions are omitted, and different portions will be mainly described below.

The air ratio control program of the controller 8 is configured so as to contain the basic control program (first program), the control program at combustion initiation (second program), the control program at a time of change in a combustion amount (third program), and the control program at a time of abnormality (fourth program), in the same way as in Embodiment 1.

The control program at a time of change in a combustion amount will be described with reference to FIGS. 15 and 16. In the description in Embodiment 3 as described below, a first set condition, a second set condition, a first set air ratio, and a second set air ratio respectively refer to a first set condition at a time of change, a second set condition at a time of change, a first set air ratio at a time of change, and a second set air ratio at a time of change. The program is configured so as to control the damper 29 by feedback so that the detected air ratio by the sensor 7 becomes a set air ratio. First, during low combustion, combustion is conducted at a first set air ratio $\lambda 1L$ under a first set condition during low combustion. In this case, the amounts of air and fuel supplied to the burner 1 are respectively A1 and F1, and the concentration of carbon monoxide on the primary side of the catalyst 4 is C1. During high combustion, combustion is conducted at a first set air ratio $\lambda 1H$ under a first set condition during high combustion. In this case, the amounts of air and fuel supplied to the burner 1 are respectively A2 and F2, and the concentration of carbon monoxide on the primary side of the catalyst 4 is C3.

At a time of change from low combustion to high combustion, the controller 8 designates combustion based on the second set air ratio $\lambda 2H$ (> the first set air ratio $\lambda 1H$ during high combustion) under the second set condition during high combustion. The amounts of air and fuel at $\lambda 2H$ are respectively A3 (> A2) and F2 (> F1), and the concentration of carbon monoxide on the primary side of the catalyst 4 is C4 (< C3). After that, the controller 8 shifts the air ratio to the first set air ratio $\lambda 1H$ under the first set condition during high combustion.

At a time of change from high combustion to low combustion, the controller 8 designates combustion based on the second set air ratio λ2L (> the first set air ratio λ1L at a time of low combustion) under the second set condition at a time of low combustion. The air amount and combustion amount at λ2L are respectively A4 (> A1) and F1, and the concentration of carbon monoxide on the primary side of the catalyst 4 is C2 (< C1). After that, the controller 8 shifts the air ratio to the first set air ratio λ1L at a time of low combustion. In Embodiment 3, the first set air ratios λ1L and λ1H are set to be an air ratio of 1.0, and the second set air ratios λ2L and λ2H are previously determined by an experiment so that the air ratio belongs to the second control band C2A.

(Operation by the control program at a time of shift of a combustion amount)

Next, the operation at a time of change in a combustion amount of the burner 1 will be described with reference to FIGS. 15 and 16. First, the operation at a time of change from low combustion to high combustion will be described. At a time of low combustion, combustion is conducted at the air ratio λ1L under the first set condition during low combustion. The controller 8 controls the motor of the damper position adjusting apparatus 30 based on a signal from the sensor 7, thereby rotating the damper 29 to a low combustion position corresponding to the air ratio λ1L and controlling the flow rate adjusting valve 25 to a low combustion position.

After that, when the combustion amount is switched from low combustion to high combustion, the controller 8 controls the motor 34, thereby controlling the rotation position of the damper 29 to a position corresponding to the air ratio λ2H at which an aperture is larger than that at a high combustion position corresponding to the first set air ratio λ1H so as to obtain the air ratio λ2H that is the second set condition during high combustion, and controlling the flow rate adjusting valve 25 to a high combustion position. At the air ratio λ2H, combustion is conducted in which the air ratio is larger than the air ratio λ1H and the concentration of carbon monoxide on the primary side of the catalyst 4 is low. After that, when it is confirmed that the rotation position of the damper 29 is moved to a position corresponding to the air ratio λ2H by the function of the damper position adjusting apparatus 30, the controller 8 designates combustion at the air ratio λ1H of the first set condition. Consequently, due to the combustion at the first set air ratio λ1H, the concentration ratio of gas on the primary side of the catalyst 4 satisfies the formula (3), and the concentration of nitrogen oxides on the secondary side of the catalyst 4 can be decreased to substantially zero.

Next, an operation at a time of change from high combustion to low combustion will be described. At a time of high combustion, combustion at the first air ratio λ1H under the first set condition at a time of high combustion is conducted. The controller 8 controls the motor of the damper position adjusting apparatus 30 based on a signal from the sensor 7, rotates the damper 29 to a high combustion position corresponding to the air ratio λ1H, and controls the flow rate adjusting valve 25 to a high combustion position.

When the combustion amount is switched from high combustion to low combustion, the controller 8 controls the motor, thereby controlling the rotation position of the damper 29 to a position at which an aperture is larger than that at the low combustion position corresponding to the first set air ratio λ1L under the low combustion first set condition so as to obtain the second set air ratio λ2L that is the second set condition at a time of low combustion and controlling the flow rate adjusting valve 25 to a low combustion position. At the second set air ratio λ2L, combustion is conducted in which an air ratio is larger than the first set air ratio λ1L and the concentration of carbon monoxide on the primary side of the catalyst 4 is low. After that, when the movement to the position corresponding to the second set air ratio λ2L is confirmed by the function of the damper position adjusting apparatus 30, the controller 8 designates the combustion at the first set air ratio λ1L under the first set condition. As a result, combustion at the first set air ratio λ1L is conducted while closing the damper 29, whereby the concentration ratio of gas on the primary side of the catalyst 4 satisfies the formula (3) and the concentration of nitrogen oxides on the secondary side of the catalyst 4 can be decreased to substantially zero.

According to the control at a time of change in a combustion amount in Embodiment 3, the combustion is shifted to the combustion at the first set air ratio after the combustion at a high air ratio is once conducted at a time of change in a combustion amount, so a great amount of carbon monoxide can be prevented from being emitted due to a shift of an air ratio.

[Embodiment 4]

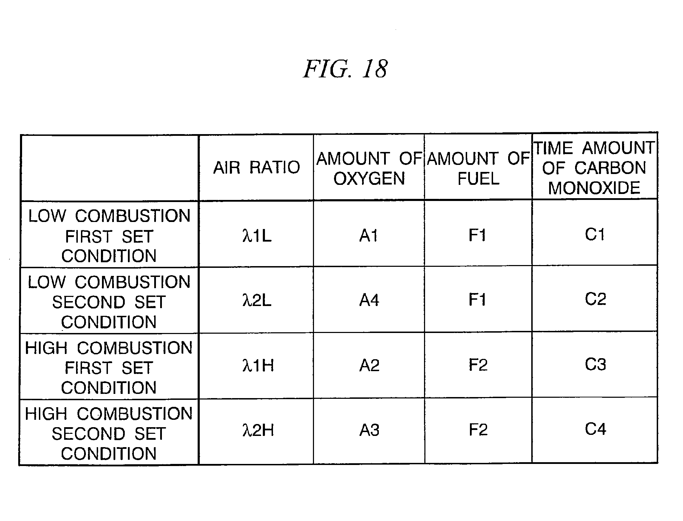

Embodiment 4 that is a variation of Embodiment 3 will be described with reference to FIGS. 17 and 18. In Embodiment 3, the aperture amounts of the damper 29 at the second set air ratio λ2L and the second set air ratio λ2H under the second set condition are set to be larger than those at the first set air ratios λ1L and λ1H under the first set condition, i.e., the air ratio is adjusted by adjusting a combustible air amount in Embodiment 4, whereas in Embodiment 4, the flow rates of the flow rate adjusting valve 25 of the fuel supply device 5 at the second set air ratios λ2L and λ2H under the second set condition are set to be lower than those at the first set air ratios λ1L and λ1H under the first set condition, i.e., the air ratio is adjusted by adjusting a combustion amount, whereby the air ratio under the second set condition is set to be larger than that under the first set condition.

The control program at a time of change in a combustion amount in Embodiment 4 will be described below. Referring to FIG. 18, first, at a time of low combustion, combustion at the first set air ratio $\lambda 1L$ is conducted under the first set condition at a time of low combustion, the amounts of air and a fuel supplied to the burner 1 at this time are respectively A1 and F1, and the concentration of carbon monoxide on the primary side of the catalyst 4 is C1. At a time of high combustion, combustion at the first set air ratio $\lambda 1H$ under the first set condition at a time of high combustion is conducted, the amounts of air and a fuel supplied to the burner 1 at this time are respectively A2 and F2, and the concentration of carbon monoxide on the primary side of the catalyst 4 is C3.

At a time of change in a combustion amount from low combustion to high combustion, the controller 8 designates combustion based on the second set air ratio $\lambda 2H$ (> first set air ratio $\lambda 1H$ at a time of high combustion) under the second set condition at a time of high combustion. The amounts of air and a fuel at $\lambda 2H$ are respectively A2 and F3 (< F2), and the concentration of carbonmonoxide on the primary side of the catalyst 4 is C4 (< C3). After that, the controller 8 shifts the air ratio to the first set air ratio $\lambda 1H$ at a time of high combustion.

Further, at a time of change in a combustion amount from high combustion to low combustion, the controller 8 designates combustion based on the second set air ratio $\lambda 2L$ (> first set air ratio $\lambda 1L$ at a time of low combustion) under the second set condition at a time of low combustion. The amounts of air and a fuel at the second set air ratio $\lambda 2L$ are respectively A1 and F4 (< F1), and the concentration of carbon monoxide on the primary side of the catalyst 4 is C2 (< C1). After that, the controller 8 shifts the air ratio to the first set air ratio $\lambda 1L$ at a time of low combustion. Even in Embodiment 4, the first set air ratios $\lambda 1L$ and $\lambda 1H$ are set to be an air ratio of 1.0, and the second set air ratios $\lambda 2L$ and $\lambda 2H$ are determined previously by an experiment so that they belong to the second control band C2A.

Next, an operation at a time of change in a combustion amount in Embodiment 4 will be described. First, an operation at a time of change from low combustion to high combustion will be described. At a time of low combustion, combustion is conducted at the first set air ratio $\lambda 1L$ under the first set condition at a time of low combustion. The controller 8 controls the motor of the damper position adjusting apparatus 30 to rotate the damper 29 to a low combustion position corresponding to the first set air ratio $\lambda 1L$ based on a signal from the sensor 7, and controls the flow rate adjusting valve 25 to a low combustion position.

After that, when the combustion amount is switched from low combustion to high combustion, the controller 8 controls the rotation position of the damper 29 to a high combustion position corresponding to the second set air ratio $\lambda 2H$ so as to obtain the second set air ratio $\lambda 2H$ that is the second set condition at a time of high combustion, and controls the aperture position of the flow rate adjusting valve 25 to a position at which the aperture is set to be lower than that at the aperture position corresponding to the first set air ratio $\lambda 1H$. After that, the controller 8 designates the combustion at the first set air ratio $\lambda 1H$ under the first set condition at a time of high combustion. Consequently, the flow rate adjusting valve 25 is opened, and the combustion at the first set air ratio $\lambda 1H$ is conducted. Consequently, the concentration ratio of gas on the primary side of the catalyst 4 satisfies the formula (3), and the concentration of nitrogen oxides on the secondary side of the catalyst 4 can be decreased to substantially zero.

Next, an operation at a time of change from high combustion to low combustion will be described. At time of high combustion, combustion at the first set air ratio $\lambda 1H$ under the first set condition at a time of high combustion is conducted. The controller 8 controls the motor of the damper position adjusting apparatus 30 to rotate the damper 29 to a high combustion position corresponding to the first set air ratio $\lambda 1H$ based on a signal from the sensor 7, and controls the flow rate adj usting valve 25 to a low combustion position.

After that, when the combustion amount is switched from high combustion to low combustion, the controller 8 controls the rotation position of the damper 29 to a low combustion position corresponding to the second set air ratio $\lambda 2L$ so as to obtain the second set air ratio $\lambda 2L$ that is the second set condition at a time of low combustion, and controls the flow rate adjusting valve 25 to a position at which the aperture position is set to be lower than that at the aperture position corresponding to the first set air ratio $\lambda 1L$. After that, the controller 8 designates combustion at the first set air ratio $\lambda 1L$ under the first set condition. Consequently, the flow rate adjusting valve 25 is opened gradually, and combustion at the first set air ratio $\lambda 1L$ is conducted. Thus, the concentration ratio of gas on the primary side of the catalyst 4 satisfies the formula (3), and the concentration of nitrogen oxides on the secondary side of the catalyst 4 can be decreased to substantially zero.

Even in Embodiment 4, in the same way as in Embodiment 1, combustion is shifted to that at the first set air ratio after combustion at a high air ratio is conducted at a time of change in a combustion amount, so a great amount of carbon monoxide can be prevented from being emitted due to the shift of an air ratio.

In FIGS. 17 and 18 of Embodiment 4, the air ratio, air amount, combustion amount and concentration of carbon monoxide are denoted with the same reference numerals so as to make the correspondence with FIGS. 15 and 16 understood easily, but actual number values may be varied.

(Embodiment 5)

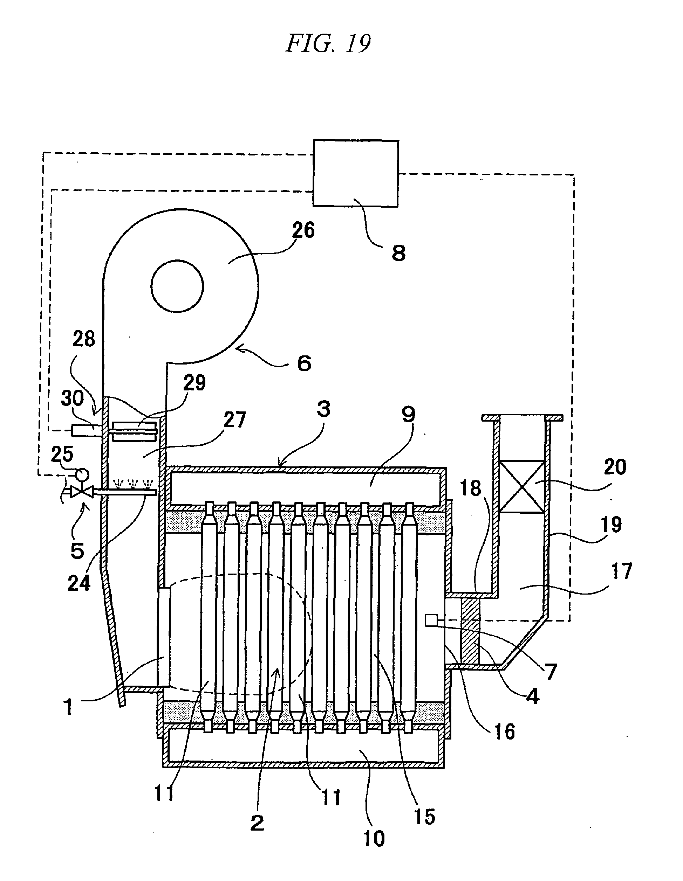

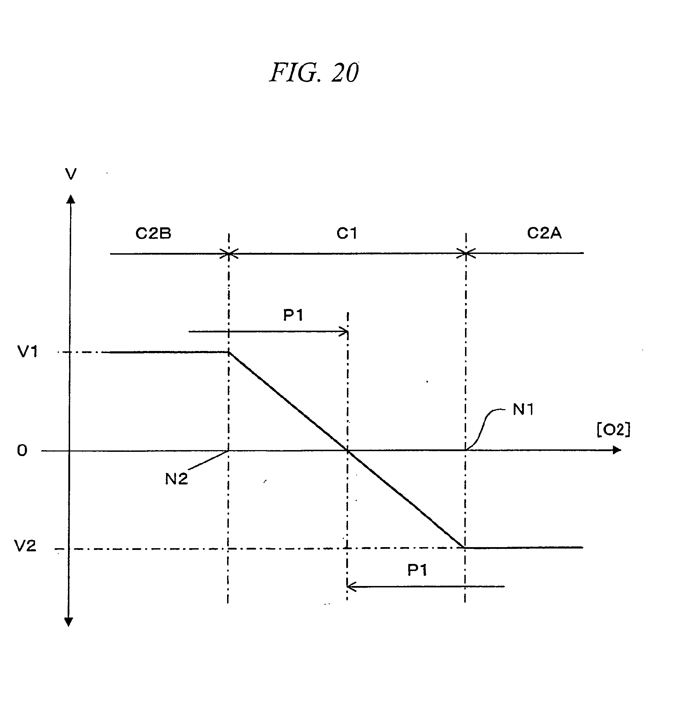

Another Embodiment 5 of the present invention will be explained by referring to FIGS. 19 and 20. In Embodiment 5, a sensor 7 for detecting the concentration of oxygen is installed not on the secondary side of the catalyst 4 but on the primary side. The sensor 7 is used exclusively as a sensor for detecting the concentration of oxygen. Then, FIG. 20 shows control characteristics of the motor 34 on the basis of the sensor 7. Hereinafter, an explanation will be made only for parts different from those of Embodiment 1, with an explanation omitted for common parts.

In Embodiment 5, an air ratio is controlled indirectly by detecting the concentration of oxygen on the primary side of the catalyst 4 in such a manner that the set air ratio $\lambda 1$ is set to 1. 0 (the concentration of oxygen on the secondary side of the catalyst 4 is decreased to zero). It is now known on the basis of various experiment results that where the concentration of oxygen $O_2$ on the primary side of the catalyst 4 is controlled to a value of $0\% < O_2 \leq 1.00\%$ under the condition of satisfying the formula (1), the concentration of oxygen on the secondary side of the catalyst 4 is decreased to substantially zero. In other words, it is known that the air ratio can be set to substantially 1.

The air ratio control program of Embodiment 5 includes control procedures in which a first control zone C1 for changing based on a value detected by the sensor 7 (oxygen concentration signal) a feeding velocity V of the motor 34 (driving amount per unit time) depending on a difference between the thus detected value and the set oxygen concentration value and second control zones C2A and C2B for dividing the feeding velocity V into respectively a first set velocity V2 and a second set velocity V1 outside the first control zone C1 are provided to control a driving amount of the motor 34.

A range in which the first control zone C1 is set will be controlled so as to fall within a range set by set oxygen concentration N1 and set oxygen concentration N2. A feeding velocity V at the first control zone C1 will be calculated by referring to formula (4) similar to Embodiment 1.

(Embodiment 6)

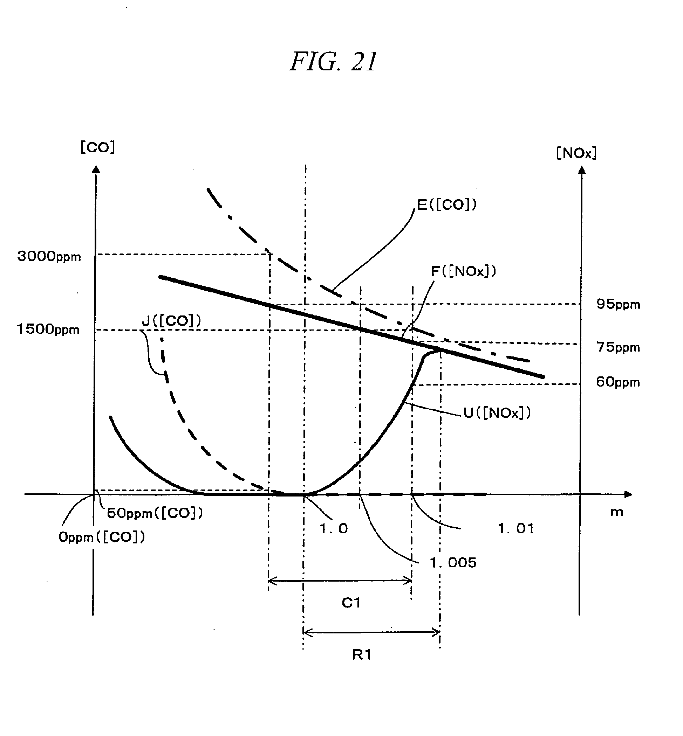

As shown in FIG. 21, Embodiment 6 is an example in which the set air ratio is set to such a value that the concentration of NOx of the secondary characteristics is substantially in excess of zero and lower than the concentration of NOx of the primary characteristics. Other constitutions are similar to those of Embodiment 1, so an explanation will be omitted. This value is an air ratio of secondary NOx leakage region R1 of the secondary characteristics at which the set air ratio is substantially in excess of 1.0. Adjustment of concentration ratio K in Embodiment 6 is Adjustment 2.

The first control zone C1 in Embodiment 6 is that in which a center of the control range (target air ratio) is an air ratio of 1.005 ($O_2$ concentration: approximately 1,000 ppm), the left end is a value in a region substantially lower than an air ratio of 1.0, and the right end is an air ratio 1.01 ($O_2$ concentration: approximately 2, 000 ppm). When an explanation is given by referring to FIG. 7, the air ratio is to be controlled in the secondary NOx leakage region (a region at which Adjustment 2 is realized) where the concentration of oxygen on the primary side of the catalyst 4 is higher than the reference oxygen concentration SK.

(Experiment 3)

In Embodiment 6, where experiments were conducted under the same conditions as those of Experiment 1 (excluding the set air ratio), the concentration of CO, that of NOx and that of $O_2$ on the primary side of the catalyst 4 (before passage of the catalyst 4) were adjusted respectively to 1,878 ppm, 78 ppm and 3,192 ppm in terms of an average value for 10 minutes, and those on the secondary side of the catalyst 4 (after passage of the catalyst 4) were adjusted respectively to 0 ppm, 42 ppm and 1,413 ppm in terms of an average value for 10 minutes.

As apparent from Experiment 3, air ratio control in Embodiment 6 is able to decrease the concentration of emitted NOx to a value lower than the concentration of NOx of the primary characteristics due to reduction action of the catalyst 4 and also decrease the concentration of emitted CO to zero.

In Embodiment 6, the first control zone C1 can be freely set in a range of the secondary NOx leakage region R1. NOx can be decreased to a greater extent and energy is saved more effectively, as the first control zone C1 is brought closer to an air ratio of 1. However, since the concentration of CO to be treated is high (in some cases, a steep concentration gradient), there is an easy leakage of CO, which makes the control more difficult to require a greater amount of catalyst. Therefore, the first control zone C1 is set to the right side so as to be distant away from an air ratio of 1, thus making it possible to obtain an easy control and decrease the amount of the catalyst 4.

More specifically, the left end of the first control zone C1 is not set to an air ratio of 1.0 or lower but can be set to an air ratio of 1.0. Further, the left end of the first control zone C1 can be set to a value exceeding the air ratio of 1.0. Embodiment 6 is applicable to Embodiment 3.

(Embodiment 7)

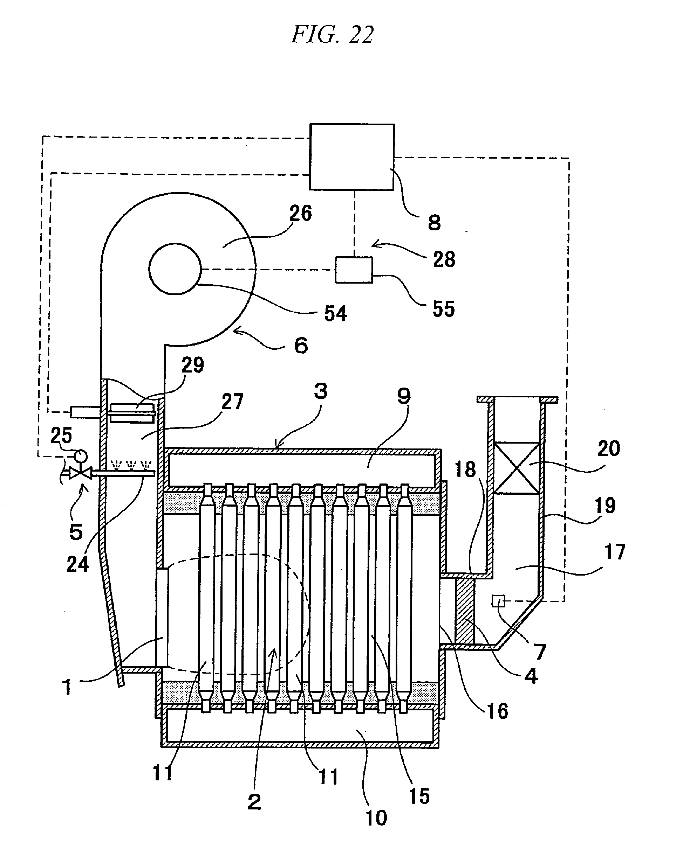

In Embodiment 7, by referring to FIG. 22, the air ratio control device 28 includes a blower motor 54 for driving the blower 26 and an inverter 55 for controlling a revolution speed of the motor 54. Embodiment 7 is constituted in such a manner that air ratio control and concentration ratio constant control are obtained not by using the damper 29 but by using the inverter 55. The control of the blower motor 54 by the controller 8 can be obtained by preventing the overshooting and hunting given in FIG. 9 covering Embodiment 1. The damper 29 controls air flow on high combustion and on low combustion by lowering the aperture on ignition and increasing the aperture during stable combustion after ignition. This air flow control can be obtained by using the inverter 55. The present invention shall not be limited thereto but may be constituted so that the air flow control on ignition is obtained either by the damper 29 or the inverter 55. In Embodiment 7, other constitutions are similar to those of Embodiment 1, an explanation will be omitted. Embodiment 7 is also applicable to Embodiment 3.

The present invention shall not be limited to Embodiments 1 to 7. For example, in Embodiment 2, an oxygen concentration sensor is used as the sensor 7 but a CO concentration sensor may be used. Further, the damper position adjusting device 30 is controlled by using the single controller (a controller for boiler) 8. In addition to the controller 8, another controller (not illustrated) for the damper position adjusting device 30 may be installed and connected to the sensor 7 and the controller 8, thereby controlling an air ratio.

**Claims**

1. A combustion apparatus, comprising:

    a burner for generating gas by combustion;
    an endothermic device for absorbing heat from the gas;
    a catalyst for oxidizing at least carbon monoxide in the gas after a passage through the endothermic device; and
    a control device for controlling the combustion of the burner to a first set condition at initiation so that a concentration of the carbon monoxide in the gas on a primary side of the catalyst becomes a first set value at initiation, wherein the control device performs a control at combustion initiation of suppressing generation and/or emission of the carbon monoxide at combustion initiation of the burner.

2. The combustion apparatus according to claim 1, wherein the control at combustion initiation controls the combustion of the burner to a second set condition at initiation so that the concentration of the carbon monoxide on the primary side of the catalyst becomes a second set value at initiation lower than the first set value at initiation.

3. The combustion apparatus according to claim 2, wherein the catalyst is preheated to an activation temperature by the combustion under the second set condition at initiation, thereby suppressing the emission of the carbon monoxide.

4. The combustion apparatus according to claim 2 or 3, wherein the first set condition at initiation and the second set condition at initiation are changed by changing an air ratio of the burner.

5. The combustion apparatus according to claim 1, comprising a heating device of the catalyst, wherein the control at combustion initiation by the control device is a control of preheating the catalyst by controlling the heating device at combustion initiation of the burner.

6. A combustion apparatus, comprising:

    a burner;
    an endothermic device for absorbing heat from gas generated by the burner;
    a catalyst for oxidizing at least carbon oxides in the gas after a passage through the endothermic device; and
    a control device for controlling the combustion by the burner to a first set condition at a time of change so that a concentration of carbon monoxide in the gas on a primary side of the catalyst becomes a first set value at a time of change,
    wherein the burner is capable of switching between a first combustion amount and a second combustion amount, and
    the control device performs a control at a time of change in a combustion amount of suppressing generation of carbon monoxide when the first combustion amount is changed to the second combustion amount or vice versa.

7. The combustion apparatus according to claim 6, wherein the control at a time of change in a combustion amount is a control of controlling the combustion by the burner to a second set condition at a time of change so that the concentration of the carbon monoxide on the primary side of the catalyst becomes a second set value at a time of change lower than a first set value at a time of change, and thereafter, shifting the condition to the first set condition at a time of change.

8. The combustion apparatus according to claim 6 or 7, wherein the first set condition at a time of change and the second set condition at a time of change are changed by changing an air ratio of the burner.

9. The combustion apparatus according to claim 1 or 6, wherein the catalyst oxidizes carbon monoxide and reduces nitrogen oxide, and
the control device adjusts a concentration ratio of oxygen, nitrogen oxides and carbon monoxide in gas on the primary side of the oxidation catalyst by the combustion under the first set condition so that a concentration of nitrogen oxides on a secondary side of the oxidation catalyst is decreased to substantially zero or a predetermined value or lower and a concentration of carbon monoxide on the secondary side of the oxidation catalyst is decreased to substantially zero or a predetermined value or lower.

10. The combustion apparatus according to claim 1 or 6, wherein the catalyst oxidizes carbon monoxide and reduces nitrogen oxides,
the control device performs a concentration ratio adjustment of adjusting a concentration ratio K of oxygen, nitrogen oxides and carbon monoxide in gas on the primary side of the oxidation catalyst by the combustion under the first set condition, and
the concentration ratio adjustment is any of Adjustment 0, Adjustment 1, and Adjustment 2 as described below.
Adjustment 0: the concentration ratio K is adjusted to a predetermined reference concentration ratio K0 in which a concentration of nitrogen oxides and a concentration of carbon monoxide on a secondary side of the oxidation catalyst are decreased to substantially zero.
Adjustment 1: the concentration ratio K is adjusted to a first predetermined concentration ratio K1 in which the concentration of nitrogen oxides on the secondary side of the oxidation catalyst is decreased to substantially zero and the concentration of carbon monoxide on the secondary side of the oxidation catalyst is decreased to a predetermined value or lower.
Adjustment 2: the concentration ratio K is adjusted to a second predetermined concentration ratio K2 in which the concentration of carbon monoxide on the secondary side of the oxidation catalyst is decreased to substantially zero and the concentration of nitrogen oxides on the secondary side of the oxidation catalyst is decreased to a predetermined value or lower.

11. The combustion apparatus according to claim 10, wherein a formula for determining the predetermined reference concentration ratio K0 is given as the following formula (1), the predetermined reference concentration ratio K0 satisfies the following formula (2), the first predetermined concentration ratio K1 is made smaller than the predetermined reference concentration ratio, and the second predetermined concentration ratio K2 is made larger than the predetermined reference concentration ratio.

$$([NOx] + 2[O_2])/[CO] = K \cdots (1)$$

$$1.0 \leq K = K0 \leq 2.0 \qquad \cdots (2)$$

where [CO], [NOx] and [O₂] denote the respective concentrations of carbon monoxide, nitrogen oxides and oxygen, satisfying the condition of $[O_2] > 0$.

12. The combustion apparatus according to claim 1 or 6, wherein the catalyst oxidizes carbon monoxide and reduces nitrogen oxides, and
the control device adjusts a concentration ratio of oxygen, nitrogen oxides and carbon monoxide in the gas on the primary side of the catalyst by the combustion under the first set condition, thereby decreasing the concentration of nitrogen oxides on the secondary side of the catalyst to substantially zero.

13. The combustion apparatus according to claim 1 or 6, wherein the catalyst oxidizes carbon monoxide and reduces nitrogen oxides, and
the control device adjusts a concentration ratio of oxygen, nitrogen oxides and carbon monoxide in the gas on the primary side of the catalyst by the combustion under the first set condition so that a concentration of carbon monoxide in the gas on the primary side of the catalyst becomes substantially equal to or more than a value obtained by adding the concentration of carbon monoxide decreased in the catalyst by the oxidation to the concentration of carbon monoxide decreased in the catalyst by the reduction.

14. The combustion apparatus according to claim 1 or 6, wherein the catalyst oxidizes carbon monoxide and reduces nitrogen oxides, and
the control device adjusts a concentration of the gas on the primary side of the catalyst so as to satisfy the following formula (3) by the combustion under the first set condition.

$$([NOx] + 2[O_2])/[CO] \leq 2.0 \cdots (3)$$

where [CO], [NOx] and [O$_2$] denote the respective concentrations of carbon monoxide, nitrogen oxides and oxygen, satisfying the condition of [O$_2$] > 0.

*FIG. 1*

## FIG. 2

## FIG. 3

*FIG. 4*

## FIG. 5

FIG. 6

## FIG. 7

*FIG. 8*

*FIG. 9*

*FIG. 10*

| RATIO OF CONCENTRATION | ADJUSTMENT | | CONCENTRATION OF NOx (ppm) | CONCENTRATION OF CO (ppm) | CONCENTRATION OF O$_2$ (ppm) |
|---|---|---|---|---|---|
| 0.91 | ADJUSTMENT 1 | BEFORE PASSING | 88 | 3114 | 1380 |
| | | AFTER PASSING | 0.4 | 103.0 | ≪100 |
| 1.01 | ADJUSTMENT 0 | BEFORE PASSING | 89 | 2949 | 1450 |
| | | AFTER PASSING | 1.0 | 66.0 | ≪100 |
| 1.44 | ADJUSTMENT 0 | BEFORE PASSING | 89 | 2461 | 1730 |
| | | AFTER PASSING | 0.0 | 18.0 | ≪100 |
| 1.63 | ADJUSTMENT 0 | BEFORE PASSING | 89 | 2414 | 1920 |
| | | AFTER PASSING | 0.0 | 9.0 | ≪100 |
| 1.84 | ADJUSTMENT 0 | BEFORE PASSING | 89 | 2250 | 2030 |
| | | AFTER PASSING | 0.8 | 11.0 | ≪100 |
| 2.18 | ADJUSTMENT 2 | BEFORE PASSING | 88 | 2069 | 2210 |
| | | AFTER PASSING | 26.1 | 1.0 | ≪100 |
| 2.55 | ADJUSTMENT 2 | BEFORE PASSING | 88 | 1922 | 2410 |
| | | AFTER PASSING | 57.2 | 1.1 | 510 |
| 5.11 | | BEFORE PASSING | 87 | 1360 | 3430 |
| | | AFTER PASSING | 78.9 | 0.0 | 2220 |

EP 2 037 171 A1

## FIG. 11

```
           ┌─────────────┐
           │    START    │
           └─────────────┘
                  │
    ┌─────────────▼────────────────────────┐  S1
    │  OPERATION AT SECOND SET CONDITION    │
    │          (AIR RATIO λ2)               │
    └─────────────┬────────────────────────┘
                  │
         ┌────────▼────────┐  S2
   NO    │    SET TIME     │
  ◄──────│  TO ELAPSED?    │
    │    └────────┬────────┘
    │             │ YES
    │    ┌────────▼────────────────────────┐  S3
    │    │  OPERATION AT FIRST SET CONDITION │
    │    │          (AIR RATIO λ1)          │
    │    └────────┬────────────────────────┘
    │             │
    │      ┌──────▼──────┐
    └──    │     END     │
           └─────────────┘
```

## FIG. 12

AIR RATIO

λ2

λ1

TIME

T0

## FIG. 13

## FIG. 14

```
              ( START )
                 │
      ┌──────────▼──────────────────────┐ S1
      │  OPERATION AT SECOND SET CONDITION │
      │         (AIR RATIO λ2)            │
      └──────────┬──────────────────────┘
                 │
   NO      ◄─────▼─────── SET TEMPERATURE ──────►  S4
                     tO OR HIGHER?
                 │YES
      ┌──────────▼──────────────────────┐ S3
      │  OPERATION AT FIRST SET CONDITION │
      │         (AIR RATIO λ1)           │
      └──────────┬──────────────────────┘
                 │
              (  END  )
```

## FIG. 15

## FIG. 16

| | AIR RATIO | AMOUNT OF OXYGEN | AMOUNT OF FUEL | TIME AMOUNT OF CARBON MONOXIDE |
|---|---|---|---|---|
| LOW COMBUSTION FIRST SET CONDITION | λ1L | A1 | F1 | C1 |
| LOW COMBUSTION SECOND SET CONDITION | λ2L | A4 | F1 | C2 |
| HIGH COMBUSTION FIRST SET CONDITION | λ1H | A2 | F2 | C3 |
| HIGH COMBUSTION SECOND SET CONDITION | λ2H | A3 | F2 | C4 |

## FIG. 17

*FIG. 18*

|  | AIR RATIO | AMOUNT OF OXYGEN | AMOUNT OF FUEL | TIME AMOUNT OF CARBON MONOXIDE |
|---|---|---|---|---|
| LOW COMBUSTION FIRST SET CONDITION | λ1L | A1 | F1 | C1 |
| LOW COMBUSTION SECOND SET CONDITION | λ2L | A4 | F1 | C2 |
| HIGH COMBUSTION FIRST SET CONDITION | λ1H | A2 | F2 | C3 |
| HIGH COMBUSTION SECOND SET CONDITION | λ2H | A3 | F2 | C4 |

*FIG. 19*

*FIG. 20*

*FIG. 21*

*FIG. 22*

## INTERNATIONAL SEARCH REPORT

| | International application No. |
|---|---|
| | PCT/JP2007/061068 |

**A. CLASSIFICATION OF SUBJECT MATTER**
*F23C99/00*(2006.01)i, *B01D53/94*(2006.01)i, *F23N1/02*(2006.01)i, *F23N5/00*(2006.01)i

According to International Patent Classification (IPC) or to both national classification and IPC

**B. FIELDS SEARCHED**

Minimum documentation searched (classification system followed by classification symbols)
F23C99/00, B01D53/94, F23N1/02, F23N5/00

Documentation searched other than minimum documentation to the extent that such documents are included in the fields searched
Jitsuyo Shinan Koho    1922-1996    Jitsuyo Shinan Toroku Koho    1996-2007
Kokai Jitsuyo Shinan Koho    1971-2007    Toroku Jitsuyo Shinan Koho    1994-2007

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 50-132535 A  (Osaka Gas Co., Ltd.),<br>20 October, 1975 (20.10.75),<br>Column 1, line 18 to column 6, line 11; drawings<br>(Family: none) | 1<br>5,6-9,13 |
| Y | JP 2002-106810 A  (Matsushita Electric Industrial Co., Ltd.),<br>10 April, 2002 (10.04.02),<br>Column 4, line 35 to column 5, line 18; Fig. 1<br>(Family: none) | 5 |
| Y | JP 09-026131 A  (Hodaka Corp.),<br>28 January, 1997 (28.01.97),<br>Column 3, lines 41 to 46; column 4, lines 11 to 15; column 4, line 43 to column 6, line 25;<br>Figs. 1 to 3<br>(Family: none) | 6-9,13 |

| ☒ Further documents are listed in the continuation of Box C. | ☐ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>21 August, 2007 (21.08.07) | Date of mailing of the international search report<br>28 August, 2007 (28.08.07) |
|---|---|
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2007/061068 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | JP 07-133905 A  (Tokyo Gas Co., Ltd.),<br>23 May, 1995 (23.05.95),<br>Column 2, line 43 to column 3, line 20; Figs.<br>1 to 4<br>(Family: none) | 9,13 |
| A | JP 50-131855 A  (Osaka Gas Co., Ltd.),<br>18 October, 1975 (18.10.75),<br>Page 2, upper left column, line 6 to page 3,<br>upper left column, line 12; Figs. 1 to 4<br>(Family: none) | 1-14 |
| A | CD-ROM of the specification and drawings<br>annexed to the request of Japanese Utility<br>Model Application No. 010978/1993(Laid-open<br>No. 065708/1994)<br>(Ishikawajima-Harima Heavy Industries Co.,<br>Ltd.),<br>16 September, 1994 (16.09.94),<br>Page 5, line 1 to page 6, line 28; Fig. 1<br>(Family: none) | 1-14 |
| A | JP 05-038421 A  (Osaka Gas Co., Ltd.),<br>19 February, 1993 (19.02.93),<br>Claim 1; examples; Figs. 5 to 9<br>(Family: none) | 1-14 |
| A | JP 2004-069139 A  (Miura Co., Ltd.),<br>04 March, 2004 (04.03.04),<br>Page 6, line 40 to page 7, line 4; page 8,<br>line 13 to page 9, line 35; Figs. 1, 4 to 5<br>(Family: none) | 1-14 |
| A | JP 2004-077085 A  (Miura Co., Ltd.),<br>11 March, 2004 (11.03.04),<br>Page 6, line 44 to page 7, line 10; page 8,<br>line 20 to page 9, line 42; Figs. 1, 4 to 5<br>(Family: none) | 1-14 |
| A | JP 2003-275543 A  (The Japan Steel Works, Ltd.),<br>30 September, 2003 (30.09.03),<br>Column 3, lines 31 to 42; Fig. 1<br>(Family: none) | 1-14 |
| A | JP 61-291026 A  (Hitachi, Ltd.),<br>20 December, 1986 (20.12.86),<br>Page 2, upper left column, line 1 to upper<br>right column, line 6<br>& EP 0208424 A1 | 1-14 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005300343 A
- JP 3221582 B
- US 5353748 A
- JP 2004125378 A
- US 6792895 B